# EUROPÄISCHE PATENTSCHRIFT

(11) **EP 2 631 592 B1**
(45) Veröffentlichungstag und Bekanntmachung des Hinweises auf die Patenterteilung: **16.07.2014**
(21) Anmeldenummer: 13153838.1
(22) Anmeldetag: 04.02.2013
(51) Int. Cl.: G01B 7/34, G01B 7/00

(54) **Messgerät und Verfahren zur Messung der Rauheit einer Oberfläche eines Körpers**
Measuring device and method for measuring the roughness of the surface of a body
Appareil de mesure et procédé destinés à mesurer la rugosité d'une surface d'un corps

(30) Priorität: 21.02.2012 DE 102012101394
(43) Veröffentlichungstag der Anmeldung: 28.08.2013
(73) Patentinhaber: Breitmeier Messtechnik GmbH, 76275 Ettlingen (DE)
(72) Erfinder: Breitmeier, Ulrich, 76287 Rheinstetten (DE)
(74) Vertreter: Geitz Truckenmüller Lucht

(56) Entgegenhaltungen:
- EP-A2- 0 507 630
- DE-A1- 4 437 033
- FR-A1- 2 404 829
- JP-A- S61 240 107
- JUSKO O ET AL: "RASTERSONDENMIKORSKOPIE ALS MESSTECHNIK FUR MIKRO- UND NANOSTRUKTUREN. ÖSCANNING PROBE MICROSCOPY AS MEASURING MEANS FOR MICRO- AND NANOSTRUCTURES", TECHNISCHES MESSEN TM, R.OLDENBOURG VERLAG. MUNCHEN, DE, Bd. 61, Nr. 10, 1. Oktober 1994 (1994-10-01), Seiten 376-381, XP000469448, ISSN: 0171-8096

## Beschreibung

Die Erfindung betrifft ein Rauheits-Messgerät zur Messung der Rauheit einer Oberfläche eines Körpers, insbesondere einer Prüfkörperoberfläche eines Prüfkörpers und/oder einer Werkstückoberfläche eines Werkstücks, mit einem als Tastnadel ausgebildeten Antastkörper, der in einer Messrichtung auslenkbar ist, und mit einem stiftförmigen Gehäuse, das sich in Richtung seiner Gehäuselängsachse über eine Gehäuselänge erstreckt, wobei in dem stiftförmigen Gehäuse ein zur Erfassung der Auslenkung der Tastnadel in der, insbesondere quer, vorzugsweise im Wesentlichen senkrecht, zu der Oberfläche verlaufenden, Messrichtung vorgesehenes Mess-System und eine an dem stiftförmigen Gehäuse befestigte Lagerung oder Aufhängung für die Tastnadel angeordnet ist, und wobei die, vorzugsweise gerade, Tastnadel an der Lagerung oder an der Aufhängung relativ zu dem Gehäuse in der Messrichtung beweglich gelagert ist und ein zur Erfassung der Rauheit der Oberfläche vorgesehenes, als Tastspitze ausgebildetes Antastende aufweist, das zur Erfassung der Rauheit der Oberfläche an der Oberfläche anliegt, und wobei im Bereich der Tastnadel im Bereich eines Gehäuse-Endes des stiftförmigen Gehäuses ein zum Andrücken und zur Abstützung des Rauheitsmessgeräts auf der Oberfläche vorgesehener Andrück- und Abstützkörper ausgebildet ist, über welchen das Rauheitsmessgerät zur oder bei oder während der Messung des der Rauheit der Oberfläche an der Oberfläche angedrückt und abgestützt ist. Die Erfindung betrifft auch ein Verfahren zur Messung der Rauheit einer Oberfläche eines Körpers, insbesondere einer Prüfkörperoberfläche eines Prüfkörpers und/oder einer Werkstückoberfläche eines Werkstücks, mittels eines derartigen Messgeräts.

Derartige Messgeräte sind seit vielen Jahren allgemein bekannt und sind bewährte und weit verbreitete Rauheitsmesser zur Beurteilung der Oberflächenqualität von Werkstücken, zur Erfassung der Mikrostruktur und der Oberflächenrauheit. Diese Instrumente besitzen eine Tastspitze aus Diamant. Mit Hilfe der Tastspitze wird die Werkstückoberfläche abgetastet, indem der Taster mittels eines motorisierten Vorschubs über die Oberfläche gezogen wird. Der Vorschub kann als separates Gerät vorgesehen oder direkt am Taster angebracht sein. Das Funktionsprinzip ist immer ähnlich. Die Tastspitze ist an einem Hebel befestigt, welcher geeignet gelagert ist und um einen bestimmten Winkel ausgelenkt werden kann. Die durch die Werkstückoberfläche über die Tastspitze induzierte Auslenkung wird von einem, üblicherweise induktiven, Meßsystem gemessen, digitalisiert und an einen PC ausgegeben. Gemessen wird mit einem derartigen Taster im Allgemeinen ein Linienprofil. Durch die räumliche Ausdehnung von Vorschubapparat und Taster, wobei bei fast allen Geräten der Tastarm waagerecht, also parallel zur Werkstückoberfläche liegt, ist es manchmal unmöglich, an Stellen zu messen, die beispielsweise in einer Vertiefung oder direkt an einer Werkstückkante liegen. Durch die räumliche Ausdehnung aller zur Zeit bekannten Geräte ist es schwierig oder überhaupt nicht möglich, das Oberflächenmikrostrukturprofil oder die Rauheit von ungünstig liegenden Oberflächensegmenten zu messen. Dies betrifft insbesondere innere Ecken oder innere Eckradien, beispielsweise in Ringnuten, wie sie beispielsweise bei Kurbelwellenlagern vorliegen. Es besteht jedoch seit Jahren anwenderseitig ein erhebliches Bedürfnis, gerade die Oberflächen in derartigen Ecken oder in derartigen Eckradien hinsichtlich deren Oberflächenmikrostrukturprofil und/oder Rauheit zu vermessen, weil dort fertigungs- und/oder beanspruchungsbedingt verstärkt Risse auftreten können.

Aus der DE 43 38 481 A1 ist ein Handprüfgerät zur Prüfung grober Oberflächenrauhigkeiten sowie gravierender Einzelfehler bekannt geworden, mittels welchem allerdings nicht entsprechend den gültigen Normen, beispielsweise der ISO 4288, Rauheiten gemessen werden können. Dieses Handprüfgerät weist eine Tastspitze von genormter Spitzenverrundung und einen manuellen Haltegriffel zur Handhabung und Führung der Tastspitze auf. Zwischen dem Haltegriffel und der Tastspitze ist ein Federelement angeordnet, das in mindestens einer Raumrichtung elastisch ist und das in mindestens einer weiteren Raumrichtung zur Führung der Tastspitze über die Prüffläche richtungsstabil bleibt. Das Federelement dient einerseits zur Prüfkraftbegrenzung, so dass die Prüfoberfläche vor unsachgemäßer Handhabung besser geschützt sein soll als bei herkömmlichen Handprüfgeräten. Andererseits soll das Federelement Unebenheiten, Rauhigkeiten sowie gravierende Einzelfehler der Prüfoberfläche, wie Oberflächenrisse oder -vertiefungen, Bearbeitungsrillen oder -riefen fühlbar auf den Haltegriffel übertragen, so dass das Prüfergebnis von dem subjektiven Empfinden der den Haltegriffel von Hand führenden Prüfperson oder Werker ankommt. Auf diese Weise kann also nur eine manuelle Grobprüfung auf das Vorhandensein derartiger Oberflächenfehler durchgeführt werden, jedoch keine normgemäße Messung des Oberflächenmikrostrukturprofils oder der Oberflächenrauheit von Prüfkörpern. Nicht nur, dass das beschriebene Prüfverfahren höchst ungenau ist, es liefert auch keine Auskunft über die laterale Verteilung der Rauheitsberge und -täler. Außerdem ist die Auflagekraft der Tastspitze undefiniert und entspricht ebenfalls nicht der Norm.

Aus der EP 0 507 630 A2 ist ein Kontaktlinsenprüfgerät bekannt geworden, wobei mittels in Längsrichtung relativ zueinander verschiebbaren zylindrischen Messdornen an einzelnen Kontaktstellen einer Rohlinse insbesondere deren Scheitelpunktradius und deren Zentrumsdicke durch Aufsetzen des Geräts auf die Rohlinse ermittelbar ist. Mit diesem Gerät ist es unmöglich, die Rauheit der Linse oder irgendeines anderen Körpers zu messen.

Aus der DE 44 37 033 A1 ist ein Vorschubgerät für die Oberflächenmessung nach dem Tastschnitt-Verfahren bekannt geworden. Das Vorschubgerät hat ein zylindrisches, rohrförmiges Gehäuse. In dem Gehäuse ist ein Mikrotaster angeordnet, der in einem Grundkörper aus Metall befestigt ist, der stirnseitig aus dem Grundkörper vorragt und der auf seiner Stirnseite eine lösbar angeordnete Schutzhaube trägt. Die Schutzhaube weist ein angeformtes, langgestrecktes Haubenteil auf, das längsgeschlitzt ist und an seinem freien Ende eine Gleitkufe trägt. Die Schutzhaube umschließt einen langgestreckten Tastarm des Mikrotasters, welcher endseitig einen Tastdiamanten trägt, welcher in unmittelbarer Nähe der an dem freien Ende des Haubenteils lösbar befestigten Gleitkufe liegt oder auch durch eine Öffnung in der Gleitkufe ragen kann. Der Tastdiamant ist an dem freien Ende des Tastarms befestigt und erstreckt sich senkrecht von dem Tastarm weg. Der Tastdiamant kann mittels des Tastarms in dem Längsschlitz in einem zwischen der Gleitkufe und einer Schutzhaube vorgesehenen Längsbereich entlang des Haubenteils bewegt werden. Der Mikrotaster ist an seinem von dem Tastarm weg weisenden Ende in einer Längsbohrung eines längsgeschlitzten Lagerteils lösbar mittels einer Klemmschraube reibschlüssig festgelegt. Der Signalausgang des Mikrotasters erfolgt über einen Steckanschluss. Der Gerätedurchmesser ist kleiner als ein englischer Zoll ausgeführt, wobei ein großer Mikrotaster mit einem Durchmesser von ca. 8 bis 12 mm und mehr verwendet werden kann. Die Außenabmessungen des in der patronenförmigen zylindrischen Gehäusehülse untergebrachten Grundkörpers haben typischerweise bei einer Länge von etwa 120 mm einen Durchmesser von ca. 24 mm. Unter Zuhilfenahme eines derartigen Vorschubgerätes ist es wegen seiner miniaturisierten, patronenartigen Ausbildung zwar möglich, eine Oberflächenmessung auch an vergleichsweise schwer zugänglichen Messorten nach dem Tastschnittverfahren durchzuführen, jedoch ist es damit nicht möglich, beispielsweise in engen Sacklöchern oder Nuten an deren inneren Ecken oder Eckausrundungen das Oberflächenmikroprofil oder die Rauheit zu messen. Die Anwendungs- und Einsatzmöglichkeiten für dieses Vorschubgerät sind beschränkt.

Aus der JP S61 240107 A ist ein kombiniertes Welligkeits- und Rauheitsmessgerät bekannt geworden. Dieses umfasst ein erstes Sensorgerät zur Detektion der Normalen auf eine freie gekrümmte Oberfläche eines Werkstücks und zur Detektion der Höhe der Welligkeit auf der gekrümmten Oberfläche sowie ein zweites Sensorgerät zur Detektion der Oberflächenrauheit der gekrümmten Oberfläche. Das zweite Sensorgerät besteht aus einem Rauheitsmessgerät mit einem Rauheitsdetektor zur Messung der Rauheit der Oberfläche, das mittels eines Hydraulikzylinders in einer Hubrichtung auf die Oberfläche zu und von der Oberfläche weg bewegbar ist. Das erste Sensorgerät hat eine Vielzahl von Sensor-Hauptkörpern in der Form von vier Antaststiften. Die Antaststifte sind gemeinsam um eine Drehachse drehbar, die parallel zu der besagten Hubrichtung des Rauheitsmessgeräts verläuft. Die die Art und Gestaltung des Rauheitsdetektors ist nicht ersichtlich.

Aus der FR 2 404 829 A1 ist ein Miniatur-Wegaufnehmer bekannt geworden. Dieser enthält einen Antastkörper mit einem abgerundeten und polierten Tasterende. Der Antastkörper ist in einem zylindrischen stiftförmigen Gehäuse in Längsrichtung des Gehäuses relativ zu diesem verschiebbar gelagert. Mit diesem Gerät ist es unmöglich, die Rauheit der Oberfläche eines Körpers zu messen.

Aus der Fachzeitschrift "Jusko, O. et al.: "Rastersondenmikroskopie als Messtechnik für Mikro- und Nanostrukturen, TM Technisches Messen 61 (1994) Oktober, No. 10, München, DE ist ein Rastertunnelmikroskop bekannt geworden, mit dem unter anderem eine Rauheitsmessung einer Oberfläche durchgeführt werden kann. Dabei liegt bedingt durch das Messprinzip die "Tunnelspitze" zur Erfassung der Rauheit nicht an der Oberfläche an, sondern wird in einem kleinen aber notwendigen Abstand zu der Oberfläche gehalten. Derartige Rastertunnelmikroskope sind wegen ihrer Größe zur industriellen Messung der Rauheit an ungünstigen Stellen eines Körpers völlig ungeeignet und die Anwendungsmöglichkeiten sind beschränkt.

Es ist eine Aufgabe der Erfindung, ein Messgerät der eingangs genannten Art zur Verfügung zu stellen, mit dem selbst an ungünstigen Stellen des Körpers, insbesondere selbst in vergleichsweise engen Vertiefungen, beispielsweise am Boden eines engen Sackloches und/oder an inneren Ecken oder an inneren Eckradien von Vertiefungen des Körpers, die Rauheit, insbesondere normgerecht, beispielsweise nach der ISO 4288, gemessen werden kann und das insbesondere vergleichsweise einfach und zuverlässig handhabbar ist. Es ist ferner eine Aufgabe der Erfindung, ein Messgerät der eingangs genannten Art zur Verfügung zu stellen, mit welchem im Vergleich zu den bislang bekannten Messgeräten dieser Art neue oder zusätzliche Anwendungs- und/oder Einsatzmöglichkeiten eröffnet werden. Es ist außerdem eine Aufgabe der Erfindung, ein Verfahren zur Messung der Rauheit einer Oberfläche eines Körpers, insbesondere einer Prüfkörperoberfläche eines Prüfkörpers und/oder einer Werkstückoberfläche eines Werkstücks, mittels eines derartigen Messgeräts zur Verfügung zu stellen, mittels welchem die vorstehenden Vorteile erzielbar sind.

Diese Aufgabe wird durch die Merkmale des Anspruches 1 bzw. durch die Merkmale des Anspruches 14 gelöst.

Zur Messung der Rauheit der Oberfläche des Körpers ist bzw. wird das Rauheits-Messgerät mit seinem Andrück- und Abstützkörper auf die Oberfläche des Körpers gedrückt, wobei oder wonach die Tastnadel mit ihrer Tastspitze an der Oberfläche des Körpers angelegt werden kann. Dabei oder anschließend kann die mit ihrer Tastspitze an der Oberfläche des Körpers anliegende Tastnadel quer oder senkrecht zu der Messrichtung relativ zu dem Körper entlang der Oberfläche, insbesondere translatorisch oder rotatorisch, bewegt werden, so dass oder wobei die Rauheit der Oberfläche mittels der Tastnadel in der Messrichtung abgetastet werden kann oder wird.

Gemäß einem besonders bevorzugten Ausführungsbeispiel kann sich die Tastnadel koaxial zu der Gehäuselängsachse erstrecken und/oder kann die Tastnadel koaxial zu der Gehäuselängsachse ausgebildet sein und/oder kann die Tastnadel eine Tastnadelachse, insbesondere eine Tastnadellängsachse, aufweisen, die koaxial zu der Gehäuselängsachse angeordnet ist. Alternativ oder zusätzlich kann vorgesehen sein, dass das Mess-System eine Tastnadelachse, insbesondere eine Tastnadellängsachse, der Tastnadel und/oder die Gehäuselängsachse enthält. Alternativ oder zusätzlich kann das Mess-System koaxial zu der Tastnadel und/oder koaxial zu einer oder der Tastnadelachse, insbesondere koaxial zu einer oder der Tastnadellängsachse, und/oder koaxial zu der Gehäuselängsachse angeordnet sein. Durch diese Maßnahmen lässt sich ein ganz besonders platzsparendes Messgerät in Verbindung mit erweiterten Anwendungs- und/oder Einsatzmöglichkeiten erreichen.

Gemäß einem besonders bevorzugten Ausführungsbeispiel kann das Messgerät im Wesentlichen stiftförmig oder als Mess-Stift ausgebildet sein und/oder kann eine konische, sich zu dem Antastende, insbesondere zu der Tastspitze, des Antastkörpers hin verjüngende Gestalt aufweisen. Dadurch kann eine weitere Verbesserung zur Lösung der Erfindungsaufgabe erreicht werden.

Gemäß einer vorteilhaften Ausgestaltung kann vorgesehen sein, dass der Antastkörper an der Lagerung oder an der Aufhängung relativ zu dem Gehäuse in der Messrichtung entweder, zur translatorischen und/oder lateralen Bewegung des Antastkörpers entlang der Oberfläche, etwa parallel zu der Gehäuselängsachse beweglich gelagert ist oder, zur rotatorischen und/oder radialen Bewegung des Antastkörpers entlang der Oberfläche, etwa senkrecht zu der Gehäuselängsachse beweglich gelagert ist. Durch diese Maßnahmen werden besonders günstige Messmöglichkeiten und besonders vorteilhafte Einsatz- und/oder Anwendungsmöglichkeiten für das Messgerät eröffnet.

Das Messgerät kann eine zur Anlage an der Oberfläche vorgesehene, vorzugsweise eine Referenzfläche aufweisende oder ausbildende, Gleitkufe zum Bewegen des mit der Gleitkufe und mit dem Antastende des Antastkörpers an der Oberfläche anliegenden Messgeräts entlang der Oberfläche aufweisen. Ein derartiges Messgerät kann bevorzugt als Handmessgerät eingesetzt werden, mittels dessen die zur Messung der Rauheit erforderliche Bewegung des Messgeräts zusammen mit dem an der Oberfläche anliegenden Antastende des Antastkörpers entlang der Oberfläche manuell erfolgen kann bzw. erfolgt.

Gemäß einer bevorzugten Weiterbildung kann vorgesehen sein, dass das Rauheits-Messgerät eine Gleitkufe aufweist, die auf einer Referenzfläche einer den Andrück- und Abstützkörper bildenden Andrückschiene, zur stationären Abstützung des Rauheits-Messgeräts, auf der Oberfläche anliegt, wobei die Gleitkufe zusammen mit der mit ihrem Antastende an der Oberfläche anliegenden und entlang der Oberfläche bewegbaren Antastkörper entlang der Referenzfläche bewegbar ist oder bewegt wird. In diesem Fall kann die Gleitkufe als ein auf der Oberfläche flächig führbarer oder geführter Gleitschlitten ausgebildet sein, der eine zur Führung auf der Oberfläche vorgesehene Gleitführungsoberfläche aufweist. Dadurch lassen sich weitere vorteilhafte Anwendungen verwirklichen.

Die Gleitkufe kann als Doppel-Gleitkufe mit einem ersten Gleitkufenkörper und einem mit diesem starr, vorzugsweise einteilig, verbundenen zweiten Gleitkufenkörper ausgebildet sein, wobei die Gleitkufenkörper auf voneinander weg weisenden Seiten des Antastkörpers angeordnet sein können. Dadurch lassen sich verbesserte Führungs- und/oder Referenzmöglichkeiten sowie vorteilhafte Möglichkeiten für eine Eliminierung der Kippabhängigkeit des gemessenen Profils oder der daraus berechneten Rauheitskennwerte schaffen.

Gemäß einer bevorzugten Ausgestaltung kann vorgesehen sein, dass die Lagerung für den Antastkörper oder die Aufhängung für den Antastkörper, an welcher der Antastkörper gelagert ist, und folglich auch der Antastkörper, insbesondere auch das Mess-System, vorzugsweise auch eine oder die vorgesehene Gleitkufe, an einem Kipp-Lager um eine Drehachse relativ zu einem Gehäuseteil des Gehäuseabschnitts des Gehäuses drehbar gelagert sind. Dadurch kann, insbesondere in Kombination mit den zuvor erwähnten Maßnahmen, die Kippabhängigkeit des gemessenen Profils oder der daraus berechneten Rauheitskennwerte eliminiert werden.

Gemäß einer vorteilhaften Ausgestaltung kann vorgesehen sein, dass das Messgerät im Bereich des zur Erfassung der Rauheit vorgesehenen Antastendes des Antastkörpers eine, vorzugsweise sich zu dem Antastende hin konisch verjüngende, den Andrück- und Abstützkörper aufweisende Schutzkappe hat, die eine Durchbrechung für das Antastende des Antastkörpers aufweist, durch welche der Antastkörper mit seinem Antastende zur Anlage an der Oberfläche hindurch treten kann oder durch welche der Antastkörper mit seinem Antastende zur Anlage an der Oberfläche hindurch tritt, insbesondere durch welche der an der Oberfläche anliegende Antastkörper hindurch tritt. Mittels einer derartigen Schutzkappe kann der Antastkörper, insbesondere dessen Antastende, wirkungsvoll gegen eine Beschädigung geschützt werden. Weiterhin eröffnen sich dadurch weiter verbesserte Anwendungs- und/oder Einsatzmöglichkeiten für das Messgerät.

Die Schutzkappe kann im Bereich ihrer Durchbrechung die zum Gleiten auf und entlang der Oberfläche vorgesehene Gleitkufe aufweisen, über welche das Messgerät auf der Oberfläche abgestützt entlang der Oberfläche quer zu der Messrichtung bewegbar ist oder bewegt wird. Die Gleitkufe kann bevorzugt eine definierte Form aufweisen. Vorzugsweise kann die Gleitkufe eine polierte Gleitfläche aufweisen. Durch eine Integration des Andrück- und Abstützkörpers in der Schutzkappe lässt sich eine noch platzsparendere Konstruktion bei reduzierten Kosten erreichen.

Die Schutzkappe kann relativ zu dem Antastkörper und/oder relativ zu dem Gehäuseteil des Gehäuseabschnitts in der Messrichtung bewegbar sein, so dass bei einer Bewegung der Schutzkappe in der Messrichtung und in Richtung auf das Antastende des Antastkörpers das Antastende bis in die Durchbrechung und/oder durch die Durchbrechung hindurch gelangen kann oder gelangt. Dadurch lässt sich ein noch besserer Schutz des Antastkörpers, insbesondere dessen Antastendes, gegen Beschädigungen bei der Handhabung des Messgeräts zum Messort und/oder von dem Messort weg erreichen.

Gemäß einer vorteilhaften Weiterbildung kann das Messgerät ein Mittel, insbesondere wenigstens einen Wegbegrenzer, zur Begrenzung eines Weges des Andrück- und Abstützkörpers relativ zu dem Antastkörper in der Messrichtung umfassen, um welchen Weg der Andrück- und Abstützkörper relativ zu dem Antastkörper in der Messrichtung axial bewegbar ist. Dadurch lassen sich vorteilhafte Signalisierungsmöglichkeiten zur Signalisierung eines zulässigen maximalen Anpressdruckes erreichen, mit welchem das Messgerät auf die Oberfläche angedrückt wird und/oder vorteilhafte Signalisierungsmöglichkeiten zur Signalisierung eines Anlagezustandes erreichen, bei welchem eine Referenzebene zur Durchführung der Messung ausgebildet ist.

Dabei kann ein Mittel, vorzugsweise ein Signalgeber, beispielsweise eine Signallampe, zur Signalisierung einer Anschlagstellung vorgesehen sein, die erreicht wird, wenn der Wegbegrenzer dann, wenn das Messgerät über seinen Andrück- und Abstützkörper auf der Oberfläche angedrückt wird, eine Begrenzung des Weges des Andrück- und Abstützkörpers relativ zu dem Antastkörper in der Messrichtung bewirkt. Es versteht sich jedoch, dass zur Signalisierung auch andere Signale und Signalgeber möglich sind, beispielsweise ein akustisches Signal eines akustischen Signalgebers, beispielsweise eines Lautsprechers. Dadurch lässt sich eine besonders einfache Handhabung bei geringen Herstellungskosten erreichen.

Das Messgerät kann ein Mittel zum Andrücken des Andrück- und Abstützkörpers und/oder des Antastkörpers auf der Oberfläche mit einer bestimmten Andrückkraft und/oder mit einem bestimmten Anpressdruck umfassen, vorzugsweise in Form wenigstens einer Feder oder in Form von wenigstens zwei, insbesondere gegensinnig gepolten, Magneten. Dadurch kann das Messgerät mit seinem Andrück- und Abstützkörper mit einem konstanten Druck auf die Oberfläche gedrückt werden, wodurch normgerechte Messungen möglich sind.

Gemäß einer bevorzugten Weiterbildung kann das Messgerät ein Mittel zum Erfassen der Andrückkraft und/oder des Anpressdruckes, vorzugsweise einen Kraftsensor oder Drucksensor, umfassen, mittels dessen die Andrückkraft und/oder der Anpressdruck erfassbar ist oder erfasst wird, mit welchem das Messgerät mit seinem Andrück- und Abstützkörper auf der Oberfläche andrückbar ist oder angedrückt wird. Dadurch kann sichergestellt werden, dass die Oberfläche bei der Messung oder durch die Messung nicht beschädigt wird.

Das Messgerät kann ein Mittel, vorzugsweise einen Neigungssensor, zur Erfassung der Neigung des Antastkörpers relativ zu der Oberfläche des Körpers umfassen, mittels dessen, insbesondere während einer Bewegung des Antastkörpers, vorzugsweise lateral oder radial, entlang der Oberfläche die Neigung des Antastkörpers relativ zu der Oberfläche erfassbar ist oder erfasst wird. Dadurch lassen sich vorteilhafte Möglichkeiten zur Signalisierung eines zulässigen Kippwinkelbereiches schaffen. Dazu kann das Messgerät mit einem geeigneten Signalgeber zur Signalisierung eines Kontroll- und/oder Warnsignals ausgestattet sein. Als Signalgeber kann beispielsweise eine Signallampe und/ oder ein akustischer Signalgeber eingesetzt sein.

Das Messgerät kann ein Mittel, vorzugsweise einen Geschwindigkeitssensor, zur Erfassung der Geschwindigkeit des Antastkörpers relativ zu der Oberfläche umfassen, mittels dessen die Geschwindigkeit des Antastkörpers relativ zu der Oberfläche erfassbar ist oder erfasst wird. Dadurch lassen sich vorteilhafte Möglichkeiten zur Signalisierung einer zulässigen Geschwindigkeit oder eines zulässigen Geschwindigkeitsbereichs von Geschwindigkeiten schaffen, mit welcher oder mit welchen das Messgerät, respektive der Antastkörper mit seinem Antastende, bei der Bewegung entlang der Oberfläche zur Messung der Rauheit der zu messenden Oberfläche bewegt, insbesondere verschoben, wird, um die Messung nicht durch eine ungleichmäßige und/oder unzulässige Geschwindigkeit zu verzerren oder zu verfälschen.

Das Messgerät kann ein Mittel, vorzugsweise einen Positionserfassungssensor oder eine Kamera, zur Erfassung der, vorzugsweise lateralen oder radialen, Position des Abtastkörpers, vorzugsweise während einer Bewegung, insbesondere Verschiebung, des Abtastkörpers relativ zu dem Körper entlang der Oberfläche quer oder senkrecht zu der Messrichtung, insbesondere über der Zeit, umfassen. Die Weg-/Geschwindigkeitserfassung kann beispielsweise durch eine Korrelationsanalyse aufeinander folgender Kamerabilder erfolgen. Auch dadurch lassen sich die vorstehenden Vorteile erreichen oder weiter verbessern.

Das Messgerät kann ein Mittel, vorzugsweise eine Miniaturkamera oder mehrere Miniaturkameras, zur Erfassung eines Bilds oder Stereobilds der Oberfläche umfassen. Dadurch lassen sich weitere, besonders vorteilhafte Messmöglichkeiten verwirklichen. Bevorzugt kann die Miniaturkamera oder die jeweilige Miniaturkamera einen CCD-Chip und ein Objektiv umfassen oder kann aus einem CCD-Chip und einem Objektiv bestehen. Besonders bevorzugt kann die Miniaturkamera oder die jeweilige Miniaturkamera, insbesondere als ein im Wesentlichen zylindrischer Körper gestaltet sein, die oder der einen Außendurchmesser von etwa 1 mm und eine Länge von etwa 5 mm aufweisen kann.

Das Messgerät kann ein Mittel, vorzugsweise einen Temperatursensor, zur Erfassung der Temperatur der Oberfläche umfassen. Dadurch können vorteilhafte Möglichkeiten zur, vorzugsweise rechnerischen, Kompensation einer etwaigen Temperaturdrift und/oder für normgerechte Messungen geschaffen werden.

Das Messgerät kann ein Mittel, vorzugsweise eine Kabel- und/oder Infrarot- und/oder Funk-Schnittstelle, zur externen Signal- und/oder Datenverarbeitung und/oder zur Stromversorgung, und/oder ein Mittel, vorzugsweise einen Prozessor, zur elektronischen Verarbeitung der mittels des Mess-Systems in Form von Daten erfassten Auslenkung des Antastkörpers in der Messrichtung und/oder ein Mittel, insbesondere einen Energiespeicher, vorzugsweise eine Batterie, zur Stromversorgung und/oder ein Mittel, vorzugsweise eine elektronische Anzeigeeinheit, insbesondere zum Anzeigen von Messergebnissen und/oder zur Signalisierung der mittels der Sensoren erfassten Kenngrößen und/oder Zustände.

Bei dem Messgerät kann es sich um ein zur Erfassung der Rauheit der Oberfläche mit seinem dort anliegenden Antastkörper durch eine manuelle Bewegung, insbesondere Verschiebung, von Hand entlang der Oberfläche bestimmtes Handmessgerät handeln, das zur Erfassung der Rauheit der Oberfläche mit seinem an der Oberfläche anliegenden Antastkörper und mit seinem ebenfalls dort anliegenden Andrück- und Abstützkörper von Hand entlang der Oberfläche bewegbar ist oder bewegt wird.

Bei dem Messgerät kann es sich um ein zu einem manuellen Andrücken an der Oberfläche bestimmtes Handmessgerät handeln, das manuell mit seinem Andrück- und Abstützkörper an der Oberfläche andrückbar ist oder angedrückt wird.

Das Messgerät kann ein zur Bewegung des Antastkörpers entlang der Oberfläche vorgesehenes Mittel, vorzugsweise ein oder mehrere Aktuatoren, zur translatorischen und/oder lateralen Bewegung des Antastkörpers entlang der Oberfläche und/oder zur rotatorischen und/oder radialen Bewegung des Antastkörpers entlang der Oberfläche umfassen.

Bei dem Messgerät kann es sich um ein zur Erfassung der Rauheit der Oberfläche durch eine motorische oder maschinelle Bewegung, insbesondere Verschiebung, des Antastkörpers mit seinem Antastende entlang der Oberfläche vorgesehenes Messgerät, vorzugsweise zum manuellen stationären Andrücken des Andrück- und Abstützkörpers an der Oberfläche, handeln, bei dem zur Erfassung der Rauheit der Oberfläche der an der Oberfläche anliegende Antastkörper motorisch entlang der Oberfläche bewegbar ist oder bewegt wird, vorzugsweise wobei das Messgerät über eine Andrück- und Abstützfläche des Andrück- und Abstützkörpers stationär, insbesondere manuell oder maschinell, an der Oberfläche andrückbar ist oder angedrückt wird.

Gemäß einem besonders vorteilhaften weiteren Ausführungsbeispiel kann vorgesehen sein, dass der Antastkörper und das Mess-System an einem, vorzugsweise langgestreckten, Schwenkarm befestigt sind, der zusammen mit dem Antastkörper und dem Mess-System, vorzugsweise motorisch oder maschinell, um eine Schwenkachse eines gehäuseinternen Schwenklagers verschwenkbar gelagert ist, und wobei die Tastnadel und das Mess-System über den Schwenkarm oder mittels des Schwenkarms an dem Schwenklager hängen. Der Schwenkarm kann ein Pendel ausbilden oder als Pendel ausgebildet sein.

Gemäß einer bevorzugten Weiterbildung kann vorgesehen sein, dass der Schwenkarm zusammen mit dem Antastkörper und dem Mess-System dann, wenn die Rauheit der Oberfläche mittels des Antastkörpers erfasst werden soll oder erfasst wird, lageunabhängig im Raum auslenkbar ist oder ausgelenkt wird oder unabhängig von der Raumlage des Messgeräts auslenkbar ist oder wird.

Gemäß einer besonders bevorzugten Ausgestaltung kann vorgesehen sein, dass das Schwenklager als ein Drehlager gestaltet ist, das eine Referenz zur Messwert-Referenzbildung in Form eines Kreisbogens vermittelt oder ausbildet, um welchen der Antastkörper relativ zu dem Gehäuse verschwenkbar ist oder verschwenkt wird.

Der Schwenkarm kann mit einem Aktuator, beispielsweise einen Motor, gekoppelt sein, mittels dessen der Schwenkarm zusammen mit dem Antastkörper und dem Mess-System, vorzugsweise über einen Exzenterkörper, insbesondere über eine Nockenscheibe, um die Schwenkachse relativ zu dem Gehäuse verschwenkbar ist oder verschwenkt wird.

Der Schwenkarm kann mit einem Rückstellmittel, beispielsweise mit einer Feder, gekoppelt sein, mittels welcher der aus einer Ausgangs- und/oder Mittenstellung in eine bestimmte Schwenkstellung ausgelenkte Schwenkarm in die Ausgangs- und/oder Mittenstellung zurück führbar ist oder zurück geführt wird.

Gemäß einem besonders bevorzugten Ausführungsbeispiel kann vorgesehen sein, dass der Antastkörper, das Mess-System, der Andrück- und Abstützkörper und die Lagerung oder die Aufhängung, vorzugsweise auch die Gleitkufe und/oder die Andrückschiene und/oder das Kipplager und/oder die Schutzkappe und/oder das Mittel oder mehrere Mittel der Mittel oder alle Mittel in dem Gehäuseabschnitt angeordnet sind. Vorzugsweise können das Mess-System und zumindest ein überwiegender Teil des Antastkörpers und die Lagerung oder die Aufhängung für den Antastkörper, vorzugsweise auch die Gleitkufe und/oder die Andrückschiene und/oder das Kipplager und/oder die Schutzkappe und/oder das Mittel oder mehrere Mittel der Mittel oder alle Mittel innerhalb des Gehäuses in dem Gehäuseabschnitt oder innerhalb des Gehäuseabschnitts des Gehäuses angeordnet sein. Dadurch lässt sich ein noch kompakteres Messgerät erreichen, mittels dessen sich weitere Einsatz- und/oder Anwendungsmöglichkeiten zur Messung des der Rauheit an noch schwerer zugänglichen Messorten oder an noch ungünstigeren Stellen eröffnen.

Es ist ein Ziel der Erfindung, einen konventionellen Messtaster so weiterzubilden oder auszubilden, dass er, vorzugsweise als Mess-Stift, mit einer stiftförmigen Gestalt und/oder einer konischen, sich zur Tastspitze verjüngenden Gestalt, insbesondere mit einem Außendurchmesser von kleiner oder gleich 20 mm, vorzugsweise kleiner oder gleich 10 mm, ausgebildet ist. Man kann den Messtaster auf die Werkstückoberfläche aufdrücken und kann ihn seitwärts verschieben, wobei das Oberflächenmikrostrukturprofil abgetastet wird.

Um eine reale Abbildung der Oberflächenmikrostruktur zu erhalten, sind dabei die folgenden Randbedingungen zu beachten: Der Messtaster oder der Mess-Stift sollte nicht verkippt werden, damit kein so genannter Cosinus-Fehler der gemessenen Profilamplitude resultiert. Dazu kann ein Neigungssensor integriert werden, welcher beispielsweise mittels einer Signallampe den zulässigen Kippwinkelbereich anzeigt. Weiterhin ist sicherzustellen, dass das erfasste Oberflächenmikrostrukturprofil durch eine ungleichmäßige Verschiebung des Stiftes nicht verzerrt wird. Hierzu sind geeignete Schutz- oder Kompensationsmaßnahmen vorzusehen, beispielsweise eine Geschwindigkeits- oder Ortsmessung oder eine Weg-Zeit-Messung mittels eines, beispielsweise optischen, Korrelationssensors. Schließlich muss sichergestellt werden, dass der Werker den Stift sauber andrückt, möglichst mit konstantem Druck und/oder mit einem Minimaldruck. Dies lässt sich beispielsweise mit gegensinnig gepolten Magneten oder mit einer Überhub-Feder verwirklichen. Beim Andrücken wird die Feder gestaucht und drückt die Stiftkappe auf die Oberfläche. Ferner kann ein Sensor vorgesehen sein, welcher die Federkraft oder den Federweg misst und welcher den zulässigen Anpressdruckbereich signalisiert. Alternativ oder zusätzlich kann ein Wegbegrenzer zur Begrenzung des Federweges der Feder vorgesehen sein. Es kann eine Software vorgesehen sein, welche im Falle einer Verletzung der oben erwähnten Bedingungen die Messung verwirft.

In einer alternativen Version des Instrumentes, bei der die erforderliche Abtastbewegung zur Tastnadelführung über die Oberfläche manuell erfolgt, kann der Stift mit einer Gleitkufe ausgeführt sein. Diese stellt die Referenz für das gemessene Rauheitsprofil dar. Funktion und Ausführung von Gleitkufen sind in der Literatur beschrieben, beispielsweise in den Normen VDI/VDE 2602 oder ISO 5436.

Um die Kippabhängigkeit des gemessenen Profils oder der daraus berechneten Rauheitskennwerte zu eliminieren, kann es sich anbieten, die Gleitkufe als Doppelkufe, insbesondere vor und hinter oder beiderseits der Tastnadel, auszuführen und diese samt Tastnadelaufhängung an einem Drehgelenk zu lagern.

Weiterhin ist es bei manchen Anwendungen vorteilhaft, das Andrückteil als Schiene ausführen, auf welcher die Gleitkufe definiert gleiten kann oder gleitet. In diesem Fall kann die Gleitkufe auch als sauber geführtes konstruktiv aufwändigeres Gleitelement, beispielsweise ähnlich einer Schlittenführung, ausgeführt sein.

Die Messung der axialen Tastnadelauslenkung kann mit einem geeigneten Sensor erfolgen, beispielsweise mit einem optischen, magnetischen, beispielsweise einem Hall- oder GMR-Sensor ("Giant Magnetoresistance-Sensor"), oder kapazitiven Sensor, also beispielsweise optisch, magnetisch oder kapazitiv. Weiterhin kann der Mess-Stift gegebenenfalls einen Prozessor, eine Kabel- oder Funkschnittstelle, eine Anzeige und/oder eine Energieversorgung, insbesondere eine Batterie, enthalten. Möglicherweise kann ein zusätzliches Auswerte- und Anzeigegerät sinnvoll sein, beispielsweise ein Tablet-PC oder ein Mobilfunkgerät.

Vorteilhaft kann eine Erweiterung mit mindestens einer Minikamera sein, welche ein Bild oder Stereobild der Werkstückoberfläche erfassen kann oder erfasst. Dazu kann gegebenenfalls auch ein Strichgitter auf die Oberfläche projiziert werden und dessen Verzerrung durch die Oberflächenstruktur kann ausgewertet werden. Weiterhin kann eine Beaufschlagung des Tasters mit Sperrluft vorteilhaft sein, um das Eindringen von Schmutz in das Geräteinnere zu verhindern. Es kann ein Temperatursensor vorgesehen sein, mittels dessen die Werkstücktemperatur zum Zwecke einer eventuellen Kompensation einer Drift erfasst werden kann.

In einer erweiterten Version kann das Instrument so ausgeführt sein, dass der Werker dasselbe statisch auf die Oberfläche drückt. Dies kann gegebenenfalls durch geeignete Maßnahmen, beispielsweise mit Hilfe von Magneten, durch Anwendung von Unterdruck oder mittels maschinellen Hilfsvorrichtungen unterstützt oder ersetzt werden. Die für die Messwertaufnahme erforderliche Seitwärtsbewegung der Tastnadel kann dann motorisch oder mittels eines geeigneten Aktuators innerhalb des Gerätes durchgeführt werden. Bei zusätzlichem Einbau einer Referenzfläche kann man so ein Bezugsebenenmessgerät erhalten. Eine bogenförmige Bezugslinie kann sich ergeben oder ergibt sich, wenn die Tastnadel samt Mess-System über eine Schwenkachse oder über einen Schwenkhebel an einem Drehlager hängt. Dazu kann die Schwenkachse oder der Schwenkhebel beispielsweise mittels eines Motors mit einer Nocke ausgelenkt und die Rückstellkraft beispielsweise durch eine Feder erzeugt werden.

Ebenso vorteilhaft kann es sein, Mittel vorzusehen, dass die Tastnadel motorisch abgehoben werden kann, um eine Beschädigung bei Nichtgebrauch zu verhindern oder um Rillen in der Oberfläche ohne Schaden überqueren zu können.

Die erfindungsgemäße Messvorrichtung kann auch vom Arm eines Koordinatenmessgerätes, eines Roboters oder einer speziell konstruierten Vorrichtung auf der Körper- oder Werkstückoberfläche platziert werden.

Schließlich ist es für einige Anwendungen vorteilhaft, Mittel vorzusehen, dass ohne weitere äußere Hilfsmittel mehr als nur ein Linienprofil gemessen werden kann. Dazu kann man beispielsweise einen Hebelarm der Tastnadel mittels eines geeigneten Aktuators seitlich stückweise versetzen. Insbesondere kann eine geeignete Korrelierung von dergestalt erhaltenen Messlinien mit einem Kamerabild der Oberfläche einen Mehrwert der Profilmessung für den Anwender bedeuten.

Ein weiteres Beschleunigungs-Meßsystem und/oder ein Sensor, eingebaut in das Tastergehäuse, kann vorteilhaft zur Erfassung und nachfolgenden Kompensation externer Vibrationen dienen sowie zur räumlichen Orientierungserkennung des Instruments.

Eine andere Ausführungsgestaltung kann sich besonders vorteilhaft zur Profil- und/oder Rauheitsmessung an Radien, beispielsweise bei oder an Lagern von Kurbelwellen, eignen. Dazu kann die Vorrichtung mit einer Abstützung, vorzugsweise stationär, auf die Werkstückoberfläche gedrückt werden. Dabei kann die Tastnadel mit einem internen Motor radial oder rotatorisch, nicht aber - wie beispielsweise zuvor geschildert - translatorisch, mittels einer oder über eine Lagerung bewegt werden. Dabei kann das interne Mess-System diese Radialbewegung mitmachen und kann dabei, wie üblich, die Auslenkung der Tastnadel in ihrer Axialrichtung registrieren oder erfassen.

In einer anderen Darstellung betrifft die Erfindung ein Abstands- und/oder Rauheits- und/oder Profilmessgerät, bestehend aus einem Oberflächen-Antastelement und einem Mess-System zur Erfassung der axialen Stellung des Antastelements, wobei das Gerät im weitesten Sinne stiftförmig ausgebildet ist. Dabei, aber auch bei dem eingangs erwähnten Messgerät, kann vorgesehen sein, dass das Gerät mit mindestens einer Gleitkufe versehen ist. Ferner kann vorgesehen sein, dass die Abstützfläche samt angebautem Meßsystem beweglich gelagert ist. Ferner kann vorgesehen sein, dass Mittel vorhanden sind, die Tastnadel mittels eines Aktuators und einer Referenzebene in mindestens einer Richtung lateral und/oder radial zu bewegen. Ferner kann vorgesehen sein, dass der Anpressdruck der Abstützfläche über eine Feder oder über Magnete vermittelt wird. Ferner kann vorgesehen sein, dass mindestens eine auf die Objektfläche gerichtete Miniaturkamera vorhanden ist. Ferner kann vorgesehen sein, dass Mittel zur Neigungsmessung der Vorrichtung vorhanden sind. Ferner kann vorgesehen sein, dass Mittel zur Messung der Lateralgeschwindigkeit und/oder der Radialgeschwindigkeit der Tastnadelbewegung vorhanden sind. Ferner kann vorgesehen sein, dass Mittel zur Messung der lateralen und/oder radialen Position der Tastnadel vorhanden sind. Ferner kann vorgesehen sein, dass Mittel zur Messung der Vibration des Gerätes vorhanden sind. Ferner kann vorgesehen sein, dass Mittel zur Lateralbewegung und/oder zur Radialbewegung der Tastnadel vorhanden sind.

Es kann auch vorgesehen sein, dass das Lager oder die Aufhängung, an welcher die Tastnadel gelagert ist, und folglich auch die Tastnadel, vorzugsweise auch das Mess-System und/oder Aufnahmemittel für die Messdaten, insbesondere gemeinsam, gegenüber der Gehäuselängsachse um einem Winkel, vorzugsweise von bis zu 90 Grad oder von bis zu 180 Grad, insbesondere von bis zu +/- 90 Grad, in eine Schwenklage verschwenkbar sind. Vorzugsweise kann in der Schwenklage eine Arretierung vorgesehen sein, so dass das Lager oder die Aufhängung, vorzugsweise auch das Mess-System oder die besagten Aufnahmemittel in dieser Schwenklage arretierbar sind. Durch die vorstehenden Maßnahmen kann man beispielweise auch an einer Seitenwand von, insbesondere engen, Rohren, Sacklöchern und Nuten messen. Als Aufnahmemittel für die Messdaten kann eine Glasfaser oder können mehrere Glasfasern eingesetzt sein. Diese können einen Bestandteil des Mess-Systems bilden.

Die Erfindung betrifft auch ein Verfahren zur Messung der Rauheit einer Oberfläche eines Körpers mittels eines erfindungsgemäßen Messgeräts, insbesondere nach einem der Ansprüche 1 bis 13, wobei das Messgerät mit seinem Andrück- und Abstützkörper auf die Oberfläche gedrückt wird, wobei oder wonach der Antastkörper mit seinem Antastende an der Oberfläche des Körpers angelegt wird, wobei oder wonach der mit seinem Antastende an der Oberfläche anliegende Antastkörper quer oder senkrecht zu der Messrichtung relativ zu dem Körper entlang der Oberfläche, insbesondere translatorisch oder rotatorisch, bewegt wird, wobei oder so dass die Rauheit der Oberfläche mittels des Antastkörpers in der Messrichtung abgetastet wird.

Weitere Vorteile, Merkmale und Einzelheiten sowie Gesichtspunkte der Erfindung ergeben sich aus den Ansprüchen sowie aus dem nachfolgenden Beschreibungsteil, in dem bevorzugte Ausführungsbeispiele der Erfindung anhand der Figuren beschrieben sind.

Es zeigen:
- Fig. 1: eine schematische Darstellung eines ersten Ausführungsbeispiels eines Messgeräts;
- Fig. 2: eine schematische Darstellung eines zweiten Ausführungsbeispiels eines Messgeräts;
- Fig. 3: in einem schematischen Ausschnitt eine vergrößerte Unteransicht des Messgeräts gemäß Figur 2;
- Fig. 4: eine schematische Darstellung eines dritten Ausführungsbeispiels eines Messgeräts;
- Fig. 5: eine schematische Darstellung eines Ausschnitts eines vierten Ausführungsbeispiels eines Messgeräts;
- Fig. 6: eine schematische Darstellung eines Ausschnitts eines fünften Ausführungsbeispiels eines Messgeräts.

Nachfolgend werden zunächst die in den Figuren gezeigten Messgeräte 10.1, 10.2, 10.3, 10.5, 10.6 im Hinblick auf deren übereinstimmende Merkmale beschrieben:

Die Messgeräte 10.1, 10.2, 10.3, 10.5, 10.6 sind zur Messung der Rauheit einer Oberfläche 11 eines Körpers 12 bestimmt. Der Körper 12 kann auch mit Prüfkörper bezeichnet werden, wobei dessen Oberfläche mit Prüfkörperoberfläche bezeichnet werden kann. Bei dem Körper 12 kann es sich um ein Werkstück handeln, dessen Oberfläche mit Werkstückoberfläche bezeichnet werden kann. Jedes Messgerät 10.1, 10.2, 10.3, 10.5, 10.6 ist als ein Mess-Stift 10 gestaltet. Es hat ein stiftförmiges, sich in einer Gehäuselängsrichtung 14 oder in Richtung seiner Gehäuselängsachse 15 erstreckendes Gehäuse 13.1, 13.2, 13.3, 13.5, 13.6. Das Gehäuse 13.1, 13.2, 13.3, 13.5, 13.6 ist mehrteilig und im Wesentlichen zylindrisch, vorzugsweise im Wesentlichen kreiszylindrisch, ausgebildet. Das Gehäuse 13.1, 13.2, 13.3, 13.5, 13.6 spannt in einem Gehäuseabschnitt 20, der sich hier über die gesamte Gehäuselänge 21 des Gehäuses 13.1, 13.2, 13.3, 13.5, 13.6 erstreckt, in einer senkrecht zu der Gehäuselängsachse 15 verlaufenden gedachten Querebene 29 betrachtet, eine maximale Außenabmessung und/oder einen maximalen Außendurchmesser 22 von kleiner oder gleich 20 mm auf.

In dem Gehäuse 13.1, 13.2, 13.3, 13.5, 13.6 ist an diesem eine Führung oder Lagerung 24.1, 24.2 oder Aufhängung 24.3, 24.5, 24.6 für einen Antastkörper befestigt, bei dem es sich um eine gerade Tastnadel 25 handelt. Die Tastnadel 25 ist an der Lagerung 24.1, 24.2 oder an der Aufhängung 24.3, 24.5, 24.6 relativ zu dem Gehäuse 13.1, 13.2, 13.3, 13.5, 13.6 in einer Messrichtung 26 beweglich gelagert. Die Tastnadel 25 erstreckt sich parallel zu der Gehäuselängsachse 15 koaxial zu dieser. Die Tastnadel 25 hat ein zur Erfassung oder Messung des der Rauheit der Oberfläche 11 des zu prüfenden Körpers 12 vorgesehenes Antastende in Form einer, vorzugsweise aus Diamant bestehenden, Tastspitze 27 . Die Tastspitze 27 der Tastnadel 25 wird zur Messung der Rauheit der Oberfläche 11 des zu prüfenden Körpers 13 an dessen Oberfläche 11 angelegt und liegt während der Messung dort an. Die Tastnadel 25 ist im Bereich eines Gehäuse-Endes 19 des Gehäuses 13.1, 13.2, 13.3, 13.5, 13.6 angeordnet. Die Tastnadel 25 ist in dem Gehäuse 13.1, 13.2, 13.3, 13.5, 13.6 an dem in diesem angeordneten und an diesem befestigten Lager oder an einer in dem Gehäuse angebrachten und an diesem befestigen Führung oder Aufhängung 24.1, 24.2, 24.3, 24.5, 24.6 derart geführt gelagert, dass sie in der Messrichtung 26 relativ zu dem Gehäuse 13.1, 13.2, 13.3, 13.5, 13.6 auslenkbar oder bewegbar ist. An dem von ihrer Tastspitze 27 weg weisenden Ende 28 der Tastnadel 25 ist diese mit einem Mess-System 30, zur Erfassung der Auslenkung der Tastnadel 25 in der Messrichtung 26 gekoppelt. Das Mess-System 30 ist koaxial zu der Tastnadel 25 und koaxial zu der Gehäuselängsachse 15 angeordnet.

In den gezeigten Ausführungsbeispielen ist das besagte Mess-System als kapazitive Ausführungsvariante 30, beispielsweise mit wenigstens einem Kondensator, gebildet. Das Mess-System 30 ist über elektrische Leitungen 31 mit einer Messelektronik 32 verbunden, die ebenfalls innerhalb des Gehäuses 13.1 angeordnet ist. Die Messelektronik 32 ist mit einem Prozessor 33 gekoppelt, der ebenfalls in dem Gehäuse 13.1 angeordnet ist.

Vorzugsweise ist die Tastnadel 25, insbesondere dann, wenn keine Messung der Rauheit einer zu prüfenden Oberfläche 11 durchgeführt werden soll, vollständig innerhalb des Gehäuseabschnitts 20 des Gehäuses 13.1, 13.2, 13.3, 13.5, 13.6 angeordnet oder in eine Handhabungsstellung und/oder Schutzstellung überführbar, in welcher sie sich dann vollständig innerhalb des Gehäuseabschnittes 20 des Gehäuses 13.1, 13.2, 13.3, 13.5, 13.6 befindet. Unabhängig davon ist es ein wesentliches Merkmal aller gezeigten Messgeräte 10.1, 10.2, 10.3, 10.5, 10.6, dass die Tastnadel 25 im Wesentlichen oder vollständig innerhalb einer gedachten, parallel zu der Gehäuselängsachse 15 verlaufenden Projektion 23 des die maximale Außenabmessung und/oder des den maximalen Außendurchmesser 22 aufweisenden Gehäuseabschnitts 20 angeordnet ist, gegebenenfalls bis auf einen, in der Messrichtung 26 betrachtet, einer Höhe oder Tiefe der zu messenden Rauheit entsprechenden, über die Projektion 23 quer zu der Messrichtung 26 und/oder quer zu der Gehäuselängsachse 15 hinaus ragenden Teil der Tastnadel 25 oder deren Tastspitze 27.

Im Bereich der Tastnadel 25 und/oder im Bereich des Gehäuse-Endes 19 ist ein zum Andrücken und zur Abstützung des Messgeräts 10.1, 10.2, 10.3, 10.5, 10.6 auf der Oberfläche 11 des zu prüfenden Körpers 12 vorgesehener Andrück- und Abstützkörper 35.1, 35.2, 35.3, 35.5, 35.6 vorgesehen, über welchen das Messgerät 10.1, 10.2, 10.3, 10.5, 10.6 zur Messung der Rauheit der Oberfläche 11 des zu prüfenden Körpers 12 an der besagten Oberfläche 11 andrückbar und abstützbar ist. Während der Messung wird das Messgerät 10.1, 10.2, 10.3, 10.5, 10.6 mit seinem Andrück- und Abstützkörper 35 auf die Oberfläche 11 des zu prüfenden Körpers 12 gedrückt, wobei sich das Messgerät 10.1, 10.2, 10.3, 10.5, 10.6 dabei auf der besagten Oberfläche 11 abstützt. Die in den Figuren gezeigten Messgeräte 10.1, 10.2, 10.3, 10.5, 10.6 sind insbesondere als Handmessgeräte konzipiert. Dies bedeutet, dass sie manuell handhabbar sind, insbesondere dass sie manuell mit ihrem jeweiligen Andrück- und Abstützkörper 35.1, 35.2, 35.3, 35.5, 35.6 zur Referenzbildung auf der Oberfläche 11 des zu prüfenden Körpers 12 andrückbar sind. Es versteht sich jedoch, dass die gezeigten Messgeräte 10.1, 10.2, 10.3, 10.5, 10.6 auch maschinell handhabbar und maschinell auf der zu prüfenden Oberfläche 11 platzierbar sein können, beispielsweise mittels eines Arms eines Koordinatenmessgerätes, mittels eines Roboters oder mittels einer speziell konstruierten Vorrichtung, in den Figuren nicht gezeigt sind.

Nachfolgend werden Besonderheiten der in den Figuren gezeigten einzelnen Messgeräte 10.1, 10.2, 10.3, 10.5, 10.6 beschrieben, in denen sich diese unterscheiden:

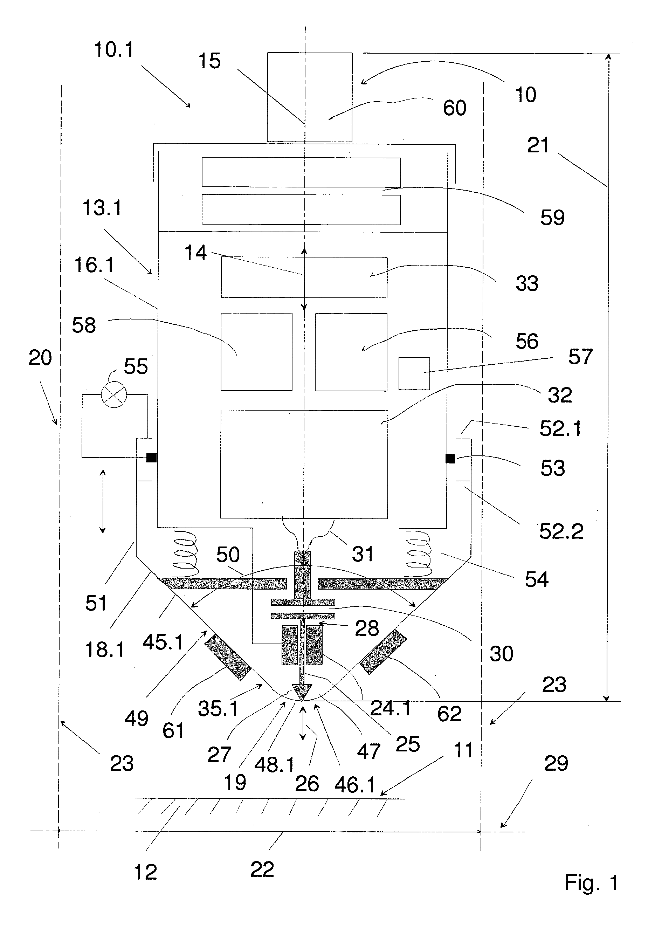

Das in Figur 1 gezeigte Messgerät 10.1 kann bevorzugt als ein Handmessgerät eingesetzt werden. Es hat zumindest einen ersten, vorzugsweise oberen, Gehäuseteil 16.1 und einen dazu etwa parallel zu der Gehäuselängsachse 15 beweglichen zweiten, vorzugsweise unteren, Gehäuseteil 18.1, bei dem es sich um den Andrück- und Abstützkörper 35.1 handelt. Dieses Messgerät 10.1 kann zur Messung der Rauheit der Oberfläche 11 des zu prüfenden Körpers 12 mit seinem Andrück- und Abstützkörper 35.1 manuell auf die zu prüfende Oberfläche 11 gedrückt und kann auch manuell seitwärts oder lateral, vorzugsweise in einer translatorischen Bewegung, entlang der zu prüfenden Oberfläche 11 des Körpers 12 bewegt, insbesondere verschoben, werden. Der Andrück- und Abstützkörper 35.1 ist in einer Schutzkappe integriert oder ist als eine, vorzugsweise trichterförmige, Schutzkappe 45.1 ausgebildet. Der Andrück- und Abstützkörper 35.1 weist an einem Ende 46.1, das der Tastspitze 27 der Tastnadel 25 zugeordnet ist, eine Gleitkufe 47 auf. Die Gleitkufe 47 ist derart gestaltet, dass sie während der Bewegung, insbesondere Verschiebung, des Messgeräts 10.1 entlang der Oberfläche 11 des zu prüfenden Körpers 12 auf der besagten Oberfläche 11 entlang gleiten kann oder entlang gleitet. Die Gleitkufe 47 bildet eine Referenzfläche zur Messwert-Referenzbildung. Der Andrück- und Abstützkörper 35.1, respektive die Schutzkappe 47, weist an dem besagten Ende 46.1 eine Durchbrechung 48.1 auf, damit dort die Tastspitze 27 der Tastnadel 25 ein- und/oder hindurch treten kann, um die Rauheit der zu prüfenden Oberfläche 11 mittels der Tastnadel 25 messen zu können. Der Andrück- und Abstützkörper 35.1, respektive die Schutzkappe 45.1, weist eine konische, sich zu dem Ende 46.1 und/oder zu der Tastspitze 27 hin verjüngende, trichterförmige Gestalt auf. Der Konus 49 des Andrück- und Abstützkörpers 35.1, respektive der Schutzkappe 45.1, ist von Geraden begrenzt, die einen, vorzugsweise spitzen, Winkel 50 einschließen. Der Winkel 50 beträgt in dem gezeigten Ausführungsbeispiel etwa 90 Grad. Der Konus 49 oder der konusförmige Teil geht in einer Richtung von dem besagten Ende 46.1 und/oder von der Tastspitze 27 weg, hier nach oben, in einen zylindrischen Teil 51 über, welcher außenseitig den ersten Gehäuseteil 16.1 des Gehäuses 13.1 übergreift. Der Andrück- und Abstützkörper 35.1, respektive die Schutzkappe 45.1, ist an dem besagten ersten Gehäuseteil 16.1 relativ zu diesem in axialer Richtung und parallel zu der Gehäuselängsachse 15 beweglich gelagert. Zur Wegbegrenzung sind im Bereich des zylindrischen Teils 51 des Andrück- und Abstützkörpers 35.1, respektive an der Schutzkappe 45.1, ein oberer Anschlag 52.1 und ein unterer Anschlag 52.2 befestigt, die, in Richtung der Gehäuselängsachse 15 betrachtet, einen geringen Abstand zueinander aufweisen, wobei die Anschläge 52.1, 52.2 in Eingriff mit einem an dem ersten Gehäuseteil 16.1 befestigen Wegbegrenzer 53 bringbar sind. Bei einer Bewegung des Andrück- und Abstützkörpers 35.1, respektive der Schutzkappe 45.1, relativ zu dem ersten Gehäuseteil 16.1 aufeinander zu, schlägt schließlich der untere Anschlag 52.2 an dem Wegbegrenzer 53 an, so dass sich eine Begrenzung des Weges bzw. der Bewegung des Andrück- und Abstützkörpers 35.1, respektive der Schutzkappe 45.1 in eine Richtung, hier nach oben, ergibt. Bei einer Bewegung des Andrück- und Abstützkörpers 35.1, respektive der Schutzkappe 45.1, relativ zu dem ersten Gehäuseteil 16.1 voneinander weg, schlägt schließlich der obere Anschlag 52.1 an dem Wegbegrenzer 53 an, so dass sich eine Begrenzung des Weges und/oder der Bewegung des Andrück- und Abstützkörpers 35.1, respektive der Schutzkappe 45.1, in eine entgegen gesetzte Richtung, also hier nach unten, ergibt. Der Andrück- und Abstützkörper 35.1, respektive die Schutzkappe 45.1, und der erste Gehäuseteil 16.1 sind miteinander über Federn 54 gekoppelt. Diese Federn 54 können auch als Überhubfedern bezeichnet werden oder fungieren also solche. Dies derart, dass ein Bewegen des Andrück- und Abstützkörpers 35.1, respektive der Schutzkappe 45.1, relativ zu dem ersten Gehäuseteil 16.1 in Richtung der Gehäuselängsachse 15 aufeinander zu, nur gegen Federkräfte der Federn 54 möglich ist. Vorzugsweise ist der Andrück- und Abstützkörper 35.1, respektive die Schutzkappe 45.1, dann, wenn dieser oder diese unbelastet ist, also insbesondere nicht gegen den ersten Gehäuseteil 16.1 gedrückt ist oder wird, mittels der Federn 54 in einer Ausgangsstellung gehalten, in welcher sich die Tastspitze 27 der Tastnadel 25 innerhalb des Andrück- und Abstützkörpers 35.1, respektive innerhalb der Schutzkappe 45.1, und mithin innerhalb des Gehäuses 13.1 befindet. Dadurch ist ein verbesserter Schutz gegen eine Beschädigung der Tastspitze 27, respektive der Tastnadel 25, ermöglicht. Zur Messung der Rauheit der Oberfläche 11 des zu prüfenden Körpers 12, wird das Messgerät 10.1 mit seinem Andrück- und Abstützköroper 35.1, respektive mit seiner Schutzkappe 45.1, gegen die zu prüfende Oberfläche 11 gegen die Federkräfte der Federn 54 angedrückt, wodurch der Andrück- und Abstützkörper 35.1, respektive die Schutzkappe 45.1 in Richtung der Gehäuselängsachse 15 gegen den ersten Gehäuseteil 16.1 bewegt, insbesondere verschoben, wird, bis die Tastspitze 27 der Tastnadel 25 durch die Durchbrechung 48.1 hindurch an der zu prüfenden Oberfläche 11 zur Anlage kommt. Davon ausgehend wird das Messgerät 10.1 mit seinem ersten Gehäuseteil 16.1 gegen die Federkräfte der Federn 54 weiter in Richtung auf die zu prüfende Oberfläche 11 gedrückt, während der Andrück- und Abstützkörper 35.1, respektive die Schutzkappe 45.1, an der Oberfläche 11 angedrückt bleibt, und zwar so lange, bis der untere Anschlag 52.2 und der Wegbegrenzer 53 aneinander anschlagen. Das Anschlagen wird mittels einer Signallampe 55 signalisiert, wodurch zugleich dem Werker oder Prüfer signalisiert wird, dass nun die Referenz vorliegt, so dass er anschließend das so an die zu prüfende Oberfläche 11 angedrückte Handmessgerät 10.1 in der gewünschten Richtung entlang der zu prüfenden Oberfläche 11 führen kann. Dabei gleitet, wie bereits vorstehend erwähnt, die Gleitkufe 47 des Andrück- und Abstützkörpers 35.1, respektive der Schutzkappe 45.1, über die zu prüfende Oberfläche 11 und zugleich wird diese mittels der Tastnadel 25 zur Messung der Rauheit der zu prüfenden Oberfläche 11 abgetastet. Durch die vorstehenden Maßnahmen kann bei der Messung ein im wesentlichen konstanter Anpressdruck verwirklich werden, mit welchem der Andrück- und Abstützkörper 35.1, respektive die Schutzkappe 45.1, auf die Oberfläche 11 des zu prüfenden Körpers 12 gedrückt wird. Die Tastnadel 25 ist an einer innerhalb des Andrück- und Abstützkörpers 35.1, respektive der Schutzkappe 45.1, angeordneten, jedoch an dem ersten Gehäuseteil 16.1 befestigten Führung 24.1 relativ zu dem Gehäuse 13.1 in der Messrichtung 26 und/oder in Richtung der Gehäuselängsachse 15 beweglich gelagert. Das Messgerät 10.1 hat in seinem Gehäuse 13.1 auch einen Vibrations-Mess-System 56 mit einem Vibrationssensor zur Erfassung und zur rechnerischen Kompensation von Vibrationen sowie einen Kipp- oder Neigungssensor 57 zur Erfassung der Kipp- oder Neigungsstellung des Messgeräts 10.1 relativ zu der zu prüfenden Oberfläche 11. Der Kipp- oder Neigungssensor 57 kann beispielsweise mit einer nicht gezeigten Signallampe gekoppelt sein, mittels welcher ein zulässiger Kippwinkelbereich signalisiert oder anzeigt werden kann. Ferner hat das Messgerät 10.1 in seinem Gehäuse 13.1 eine Kabel- und/oder Funk-Schnittstelle 58 zur externen Signal- und/oder Datenverarbeitung und/oder zur Stromversorgung, den, vorzugsweise auf einer Prozessorplatine angeordneten, Prozessor 33, insbesondere zur elektronischen Verarbeitung der mittels des Mess-Systems 30 in Form von Daten erfassten Auslenkung der Tastnadel 25, sowie eine Batterie 59 zur Stromversorgung. Ferner umfasst das Messgerät 10.1 eine elektronische Anzeigeeinheit 60, insbesondere zum Anzeigen von Messergebnissen, wie Rauhigkeitsparametern, und/oder zur Signalisierung der mittels der Sensoren erfassten Kenngrößen und/oder Zustände. Die Anzeigeeinheit 60 ist ebenfalls innerhalb einer Projektion 23 parallel zu der Gehäuselängsachse 15 in dem die maximale Außenabmessung und/oder in dem den maximalen Außendurchmesser 22 aufweisenden Gehäuseabschnitt 20 des Gehäuses 13.1 angeordnet. An der konischen Außenseite des Andrück- und Abstützkörpers 35.1 ist einerseits ein Weg- oder Geschwindigkeitssensor 61 zur Erfassung der Geschwindigkeit der Tastnadel 25 relativ zu der zu prüfenden Oberfläche 11 und andererseits eine Miniaturkamera 62 zur Erfassung eines Bilds oder Stereobilds der zu prüfenden Oberfläche 11 befestigt.

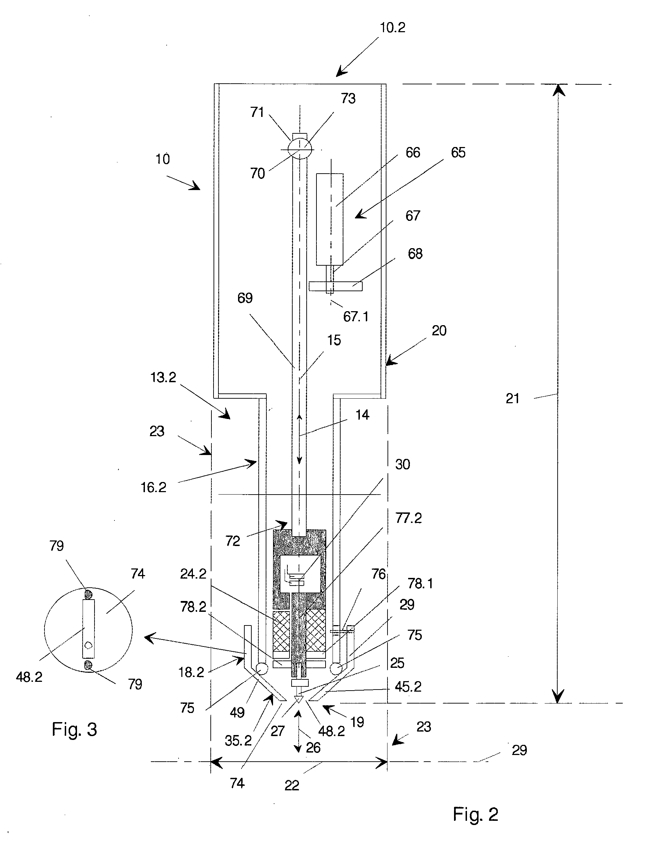

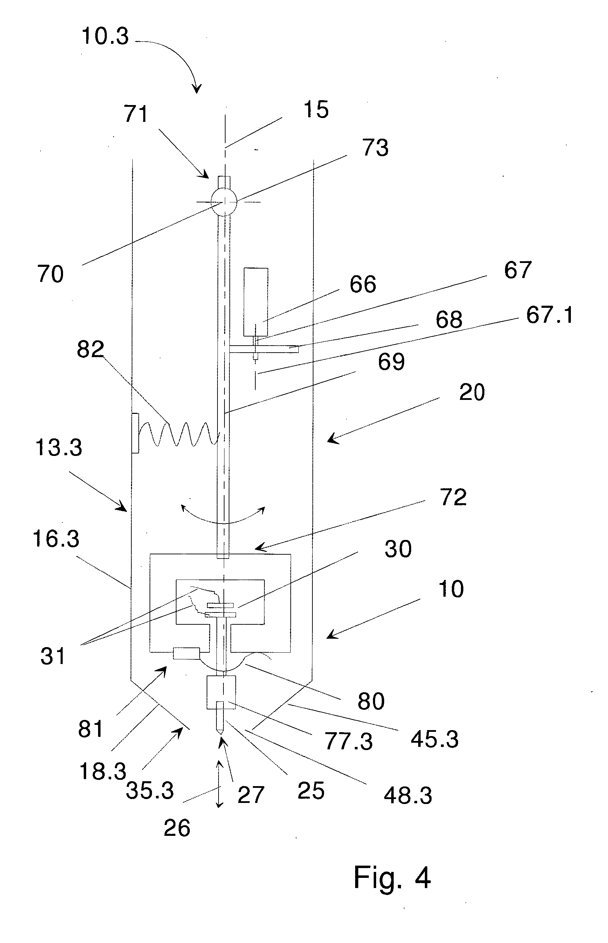

Das in Figur 2 gezeigte Messgerät 10.2 weist eine in seinem Gehäuse 13.2 integrierte Vorrichtung 65 zur maschinellen oder motorischen Bewegung seiner Tastnadel 25 entlang der zu prüfenden Oberfläche 11 auf. Dieses Messgerät 10.2 ist also, im Unterschied zu dem in Figur 1 gezeigten Messgerät 10.1, dazu bestimmt, zur Erfassung der Rauheit der zu prüfenden Oberfläche 11 nicht entlang der Oberfläche 11 bewegt zu werden, sondern statisch auf die zu prüfende Oberfläche angedrückt zu werden. Die für die Messwertaufnahme erforderliche Seitwärtsbewegung der Tastnadel 25 wird bei diesem Messgerät 10.2 mittels eines Aktuators in Form eines Elektromotors 66 bewirkt, der innerhalb des Gehäuses 13.2 angeordnet ist. Dazu ist an einer Antriebswelle 67 des Motors 66 eine Exzenterscheibe oder Nocke 68 befestigt, die in Wirkverbindung mit einem Schwenkhebel 69 steht. Der Schwenkhebel 69 ist im Bereich seines ersten Endes 71 um eine Schwenkachse 70 eines in dem Gehäuse angeordneten und an dem Gehäuse befestigten Drehlagers 73 schwenkbar angelenkt. An dem Schwenkhebel 69 sind im Bereich seines von dem ersten Ende 71 weg weisenden zweiten Endes 72 das Mess-System 30 und die damit gekoppelte Tastnadel 25 befestigt. Zur seitlichen oder lateralen Bewegung des in der Mess- und Gebrauchsstellung über den Schwenkhebel 69 an dem Drehlager 73 hängenden Antastkörpers 50, wird die Antriebswelle 67 des Motors 66 in Drehung versetzt, wodurch sich die Exzenterscheibe oder der Nocken 68 entsprechend mitdreht, die oder der in einem axialen Abstand zu der Drehachse 70 des Drehlagers 73 in Wirkverbindung mit dem Schwenkhebel 69 steht, so dass der Schwenkhebel 69 um die Drehachse 70 des Drehlagers 73 verschwenkt wird. Zweckmäßigerweise ist der Schwenkhebel 69 mit einer nicht gezeigten Rückstell-Feder gekoppelt, die im Inneren des Gehäuses 13.2 an diesem befestigt ist (siehe diesbezüglich jedoch entsprechend die Figur 4). Das Gehäuse 13.2 dieses Messgeräts 10.2 hat im Bereich seines der Tastnadel 25 zugeordneten Gehäuseteil-Endes 17 des ersten Gehäuseteils 16.2 einen ebenfalls als Antasthülse oder Schutzkappe 45.1 bezeichenbaren oder fungierenden Andrück- und Abstützkörper 35.2. Dieser ist wiederum trichterförmig und/oder konisch gestaltet und verjüngt sich in Richtung der Tastspitze 27 der Tastnadel 25. Im Unterschied zu dem in Figur 1 gezeigten ersten Ausführungsbeispiel, hat der Andrück- und Abstützkörper 35.2 des in Figur 2 gezeigten Messgeräts 10.2 an seinem der Tastspitze 27 der Tastnadel 25 zugeordneten Ende keine Gleitkufe, sondern eine ringförmige Andrück- und Abstützfläche 74, über welche das Messgerät 10.2 an der zu prüfenden Oberfläche 11 statisch abstützbar ist oder abzustützen ist oder abgestützt wird. An dem Gehäuseteil-Ende 17 des rohrförmigen ersten Gehäuseteils 16.2 des Gehäuses 13.2 ist ein umlaufender elastischer Gummiring 75 befestigt, der außerdem im Inneren des trichterförmigen Andrück- und Abstützkörpers 35.2 an diesem befestigt ist. Der Gummiring 75 fungiert als eine Feder. Auf diese Weise ist der Andrück- und Abstützkörper 35.2 über den Gummiring 75 relativ zu dem ersten Gehäuseteil 16.2, insbesondere in einer Richtung parallel zu der Gehäuselängsachse 15 und/oder in Messrichtung 26, beweglich gelagert, so dass bei einem Andrücken des Messgeräts 10.2 über seinen Andrück- und Abstützkörper 35.2 auf der zu prüfenden Oberfläche 11, der Andrück- und Abstützkörper 35.2 gegen die Federkraft des elastischen Gummiringes 75 relativ zu dem das Drehlager 73 für den Schwenkhebel 69 aufweisenden ersten Gehäuseteil 16.1 bewegt wird. Auch hier ist, ähnlich wie bereits vorstehend im Zusammenhang mit der Figur 1 beschrieben, eine Wegbegrenzung in Form eines Hubbegrenzungsmittels 76 vorgesehen. Auch bei diesem Ausführungsbeispiel ist die Tastnadel 25 an einer innerhalb des Andrück- und Abstützkörpers 35.2, respektive der Schutzkappe 45.2, angeordneten Führung 24.2 relativ zu dem Gehäuse 13.2 in der Messrichtung 26 parallel zu der Gehäuselängsachse 15 beweglich gelagert. Die Führung oder das eine Linearführung der Tastnadel 25 ermöglichende Lager 24.2 ist im Bereich des zweiten Endes 72 des Schwenkhebels 69 befestigt, der über das Schwenklager 73 an dem ersten Gehäuseteil 16.2 des Gehäuses 13.2 befestigt ist. Die Tastnadel 25 kann, wie gezeigt, an einem Antastkörper-Träger 77 befestigt sein, der an der Führung oder an dem Lager 24.2 relativ zu dieser oder zu diesem in der Messrichtung 26 verschieblich gelagert ist. Um die Tastnadel 25 mit ihrer Tastspitze 27 zur Messung der Rauheit der zu prüfenden Oberfläche 11 dort mit einer bestimmten Andrückkraft andrücken zu können, sind einerseits an der Führung oder an dem Lager 24.2 und andererseits an dem Antastkörper-Träger 77 Magnete 78.1, 78.2 befestigt, die gegensinnig polbar sind oder die gegensinnig gepolt sind. Mittels der Magnete 78.1, 78.2 können bestimmte Magnetkräfte bewirkt werden oder werden bestimmte Magnetkräfte bewirkt, welche die Tastnadel 25 relativ zu ihrer Führung oder zu ihrem Lager 24.2 von dieser oder von diesem weg bewegen können oder weg bewegen, um diesen unter Durchsetzung der an dem unteren Gehäuse-Ende 19 des Gehäuses 13.2 vorgesehenen Durchbrechung 48.2 des Andrück- und Abstützkörpers 35.2 bis auf die Oberfläche 11 des zu prüfenden Körpers 12 bewegen zu können, wenn das Messgerät 10.2 über seinen Andrück- und Abstützkörper 35.2 auf der besagten Oberfläche 11 des zu prüfenden Körpers 12 angedrückt ist. Wie in Figur 3 ersichtlich, ist die Durchbrechung 48.2 in Form eines langlochförmigen Schlitzes ausgebildet. Die Schlitzlänge des Schlitzes 48.2 ist geringfügig größer als die maximale seitliche oder laterale Auslenkung der Tastnadel 25 bei deren Verschwenken um die Drehachse 70 des Drehlagers 73. Vorzugsweise neben den beiden Schlitz-Enden des Schlitzes sind Aufsetznoppen 79 an der Außenseite des trichterförmigen Andrück- und Abstützkörpers 35.2 befestigt. Die Aufsetznoppen 79 bestehen aus einem reibungserhöhenden Material, beispielsweise aus Gummi, um ein Wegrutschen des über seinen Andrück- und Abstützkörper 35.2 auf der zu prüfenden Oberfläche 11 angedrückten Messgeräts 10.2 zu vermeiden oder zu verhindern.

Das in Figur 4 gezeigte Messgerät 10.3 unterscheidet sich von dem in Figur 2 gezeigten Messgerät 10.2 im Wesentlichen nur durch eine andere Führung und Beaufschlagung der Tastnadel 25. Funktionsgleiche Bauteile sind mit gleichen Bezugszeichen versehen. In diesem dritten Ausführungsbeispiel eines Messgeräts 10.3 ist die Tastnadel 25 mit einer Feder, beispielweise einer Blattfeder 80, gekoppelt, und zwar derart, dass die Tastnadel 25 an der Feder 80 angelenkt und von der Feder 80 getragen ist, wobei die Feder 80 an einem ihrer Feder-Enden an einem Federträger 81 befestigt ist, der wiederum an dem unteren Ende eines um die Drehachse 70 des gehäusefesten Drehlagers 73 verschwenkbaren Schwenkhebels 69 befestigt ist. Durch die Feder 80 ist also sowohl eine Führung 24.3 und Halterung für die relativ zu dem Federträger 81 und/oder relativ zu dem Schwenkhebel 69 in der Messrichtung 26 beweglichen Tastnadel 25 verwirklicht als auch ein elastisches Anpressmittel zur Ermöglichung einer Anlage der Tastnadel 25 an der zu prüfenden Oberfläche 11 mit einer bestimmten Andrückkraft. In der Figur 4 ist die bereits vorstehend im Zusammenhang mit der Abhandlung des in Figur 3 gezeigten Messgeräts erwähnte Rückstell-Feder 82 eingezeichnet, die einerseits mit dem Schwenkhebel 69 und andererseits mit dem Gehäuse 13.2, 18.2 verbunden ist.

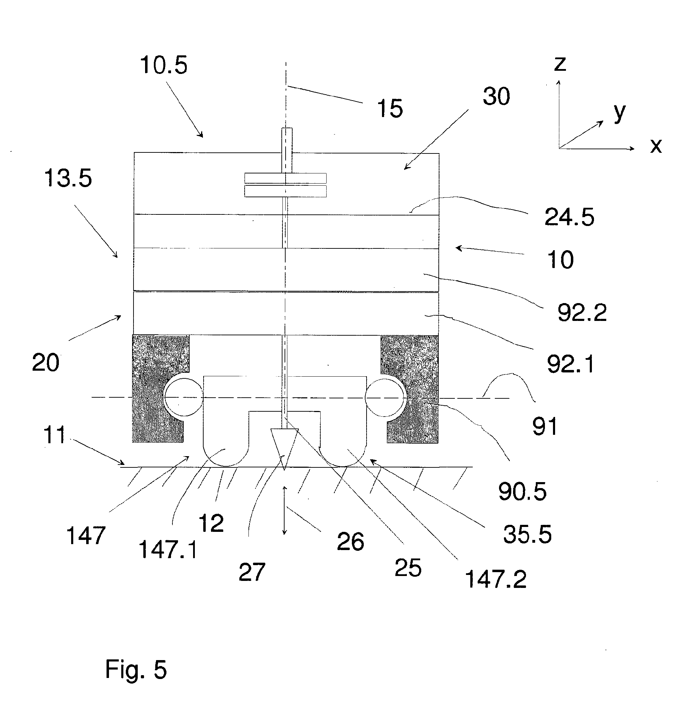

In Figur 5 ist ein Ausschnitt eines weiteren Ausführungsbeispiels eines Messgerätes 10.5 gezeigt. Es weist im Bereich seines der Tastnadel 25 zugeordneten Endes 19 ein Kipplager 90.5 auf, an dem um eine etwa senkrecht zu der Messrichtung 26 ausgebildete Kipp-Drehachse 91 drehbar eine Gleitkufe 147 in Form einer Doppel-Gleitkufe gelagert ist, die dazu bestimmt ist, unmittelbar auf die zu prüfende Oberfläche 11 aufgedrückt zu werden. Die Doppel-Gleitkufe 147 bildet eine Referenzebene zur Messwert-Referenzbildung aus. Die Doppel-Gleitkufe 147 hat einen ersten Gleitkufenkörper 147.1 und einen mit diesem starr, vorzugsweise einteilig, verbundenen zweiten Gleitkufenkörper 147.2. Der erste Gleitkufenkörper 147.1 und der zweite Gleitkufenkörper 147.2 sind auf voneinander weg weisenden Längsseiten des Antastkörpers 45 angeordnet. In der Ansicht gemäß Figur 5 erstreckt sich also die Tastnadel 25 zwischen den beiden Gleitkufenkörpern 147.1, 147.2. Die Tastnadel 25 ist zusammen mit der Doppel-Gleitkufe 147 um die Kipp-Drehachse 91 relativ zu dem Gehäuse 13.5 verschwenkbar gelagert. Das Kipplager 90.5 für die Tastnadel 25 und für die Doppel-Gleitkufe 147 ist an einem ersten Verfahrschlitten 92.1 befestigt, mittels dessen eine Bewegung, insbesondere Verschiebung, des Kipplagers 90.5 zusammen mit der Tastnadel 25 und der Doppel-Gleitkufe 147 in einer ersten Richtung etwa senkrecht zu der Gehäuselängsachse 15 möglich ist. Der erste Verfahrschlitten 92.1 ist an einem zweiten Verfahrschlitten 92.2 befestigt, mittels dessen eine Bewegung des ersten Verfahrschlittens 92.1 zusammen mit dem Kipplager 90.5 und der Tastnadel 25 und der Doppel-Gleitkufe 147 in einer zweiten Richtung etwa senkrecht zu der Gehäuselängsachse 15 möglich ist, die senkrecht zu der ersten Richtung verläuft. Entsprechend einer üblichen Koordinatenbezeichnung kann der erste Verfahrschlitten 92.1 als ein X-Verfahrschlitten bezeichnet werden und der zweite Verfahrschlitten 92.2 kann als ein Y-Verfahrschlitten bezeichnet werden. Es versteht sich jedoch, dass es sich bei dem ersten Verfahrschlitten 92.1 auch um einen Y-Verfahrschlitten handeln kann, während es sich dann bei dem zweiten Verfahrschlitten 92.2 um einen X-Verfahrschlitten handelt. Die beiden Verfahrschlitten 92.1, 92.2 sind jeweils mit einem Aktuator zur Bewegung des jeweiligen Verfahrschlittens in der ersten und/oder zweiten Richtung, oder in der X- und/oder Y-Richtung, gekoppelt. Die Tastnadel 25 und/oder deren Antastkörper-Träger 77.5 ist an einer oberhalb des zweiten Verfahrschlittens 92.2 angeordneten Antastkörper-Aufhängung oder Antastkörper-Träger-Aufhängung 24.5 gelagert. Dabei kann es sich um eine Membran handeln.

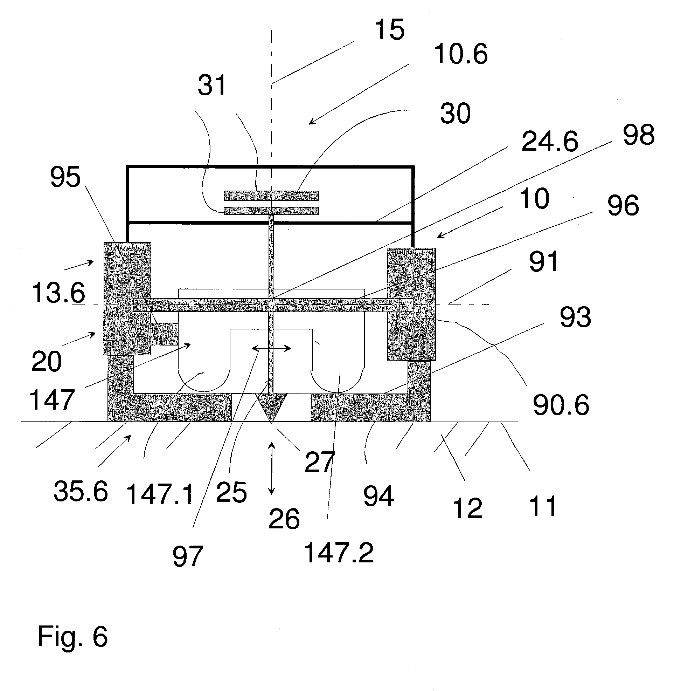

In Figur 6 ist ein Ausschnitt eines weiteren Ausführungsbeispiels eines Messgerätes 10.6 gezeigt. Es weist im Bereich seines der Tastnadel 25 zugeordneten Endes 19 wiederum ein Kipplager 90.6 auf, an dem um eine etwa senkrecht zu der Messrichtung ausgebildete Kipp-Drehachse 91 drehbar eine Gleitkufe in Form einer Doppel-Gleitkufe 147 gelagert ist. Im Unterschied zu dem in Figur 5 gezeigten Ausführungsbeispiel, ist jedoch nun die Doppel-Gleitkufe 147 dazu bestimmt, unmittelbar auf einer, eine Referenzebene ausbildenden, vorzugsweise planebenen, Oberfläche 93 einer Auflage- und Referenzschiene 94 aufgedrückt zu sein oder zu werden. In Figur 5 liegt die Doppel-Gleitkufe 147 unmittelbar auf der Referenzfläche 93 der Auflage- und Referenzschiene 94 an. Die Auflage- und Referenzschiene 94 bildet den Andrück- und Abstützkörper 35.6 des Messgeräts 10.6. Dieses Messgerät 10.6 wird also zur Messung der Rauheit einer Oberfläche 11 eines zu prüfenden Körpers 12 mit seinem Andrück- und Abstützkörper 35.6, also mit seiner Auflage- und Referenzschiene 94, stationär auf die zu prüfende Oberfläche 11 aufgesetzt und dort angedrückt. Die Doppel-Gleitkufe 147 hat wiederum einen ersten Gleitkufenkörper 147.1 und einen mit diesem starr, vorzugsweise einteilig, verbundenen zweiten Gleitkufenkörper 147.2. Der erste Gleitkufenkörper 147.1 und der zweite Gleitkufenkörper 147.2 sind auf voneinander weg weisenden Längsseiten der Tastnadel 25 angeordnet. In der Ansicht gemäß Figur 6 erstreckt sich also die Tastnadel 25 ebenfalls zwischen den beiden Gleitkufenkörpern 147.1, 147.2. Die Tastnadel 25 erstreckt sich durch eine Bohrung 98 der Doppel-Gleitkufe 147 und ist dort relativ zu der Doppel-Gleitkufe 147 verschieblich gelagert. Auch die Tastnadel 25 ist zusammen mit der Doppel-Gleitkufe 147 um die Kipp-Drehachse 91 relativ zu dem Gehäuse 13.6 verschwenkbar gelagert. Im Unterschied zu dem in Figur 5 gezeigten Ausführungsbeispiel, bei dem die Tastnadel 25 auch bei stationär an der zu prüfenden Oberfläche 11 angedrücktem Andrück- und Abstützkörper 35.5 in zwei zueinander senkrechten Richtungen unabhängig voneinander über die zu prüfende Oberfläche 11 bewegt werden kann oder ggf. gleichzeitig, so dass eine Flächen- oder Ebenen-Abtastung in beliebigen Richtungen über eine im wesentlichen ebene Fläche, beispielweise auch bogenförmig, möglich ist, kann bei dem in Figur 6 gezeigten Messgerät 10.6 dann, wenn dieses, wie gezeigt, an die zu prüfende Oberfläche 11 angedrückt ist, die Tastnadel 25 nur in einer Flächenrichtung, nämlich in Richtung des Doppelpfeils 97, translatorisch bewegt werden. Dazu ist ein hier ein Verschiebeaktuator 95 vorgesehen, bei dem es sich ebenfalls um einen Verfahrschlitten handeln kann. Dieser Verschiebeaktuator 95 ist ebenfalls zwischen einer Aufhängung 24.6 für die Tastnadel 25 und der Tastspitze 27 der Tastnadel 25 angeordnet. Der Verschiebeaktuator 95 ist einerseits an an einem gehäusefesten Teil des Kippgelenks 90.6 befestigt und ist andererseits an der Doppel-Gleitkufe 147 befestigt. Mit Hilfe des Verschiebeaktuators 95 kann die Doppel-Gleitkufe 147 zusammen mit der Tastnadel 25 und dem mit dieser gekoppelten Mess-System 30 parallel zu der Kipp-Drehachse 91 entlang eines die Kipp-Drehachse 91 enthaltenden Achskörpers 96 in Richtung des Doppelpfeils 97 verschoben werden. Während einer solchen Verschiebung mit Hilfe des Verschiebeaktuators 95 wird mit Hilfe der an der Oberfläche 11 anliegenden Tastspitze 27 der Tastnadel 25 die Rauheit der Oberfläche 11 des Körpers 12 abgetastet, wobei zugleich die beiden Gleitkufenkörper 147.1, 147.2 an und entlang der Referenzfläche 93 der stationär auf der Oberfläche 11 des Körpers 12 angedrückten Auflage- und Referenzschiene 94 verschoben werden.

Zur Messung der Rauheit der Oberfläche 11 eines Köpers 12 mittels der in den Figuren gezeigten Messgeräte 10.1, 10.2, 10.3, 10.5, 10.6 wird jeweils wie folgt vorgegangen: Das jeweilige Messgerät 10.1, 10.2, 10.3, 10.5, 10.6 wird mit seinem Andrück- und Abstützkörper 35.1, 35.2, 35.3, 35.5, 35.6 auf die Oberfläche 11 des Körpers 12 gedrückt, wobei oder wonach die Tastnadel 25 mit ihrer Tastspitze 27 an der zu prüfenden Oberfläche 11 angelegt wird, wobei oder wonach die mit ihrer Tastspitze 27 an der besagten Oberfläche 11 anliegende Tastnadel 25 quer zu der Messrichtung 26 relativ zu dem Körper 12 entlang der Oberfläche 11 translatorisch oder rotatorisch bewegt wird, währenddessen die Rauheit der besagten Oberfläche 11 mittels der Tastnadel 25 in der Messrichtung 26 abgetastet wird.

### BEZUGSZEICHENLISTE

- 10: Mess-Stift
- 10.1: Messgerät
- 10.2: Messgerät
- 10.3: Messgerät
- 10.5: Messgerät
- 10.6: Messgerät
- 11: Oberfläche/ Prüfkörperoberfläche/ Werkstückoberfläche
- 12: Körper/Prüfkörper/ Werkstück
- 13.1: Gehäuse
- 13.2: Gehäuse
- 13.3: Gehäuse
- 13.5: Gehäuse
- 13.6: Gehäuse
- 14: Gehäuselängsrichtung
- 15: Gehäuselängsachse
- 16.1: erster Gehäuseteil
- 16.2: erster Gehäuseteil
- 16.3: erster Gehäuseteil
- 17: Gehäuse (Teil)-Ende
- 18.1: zweiter Gehäuseteil
- 18.2: zweiter Gehäuseteil
- 18.3: zweiter Gehäuseteil
- 19: Gehäuse-Ende
- 20: Gehäuseabschnitt
- 21: Gehäuselänge
- 22: maximale Außenabmessung/maximaler Außendurchmesser
- 23: Projektion
- 24.1: Lagerung
- 24.2: Lagerung
- 24.3: Aufhängung
- 24.5: Aufhängung
- 24.6: Aufhängung
- 25: Antastkörper/ Tastnadel
- 26: Messrichtung
- 27: Antastende/Tastspitze
- 28: Ende von 25
- 29: Querebene
- 30: Mess-System/ Kondensator
- 31: elektrische Leitung
- 32: Messelektronik
- 33: Prozessor (Platine)
- 35.1: Andrück- und Abstützkörper
- 35.2: Andrück- und Abstützkörper
- 35.3: Andrück- und Abstützkörper
- 35.5: Andrück- und AbstützKörper
- 35.6: Andrück- und AbstützKörper
- 45.1: Schutzkappe
- 45.2: Schutzkappe
- 45.3: Schutzkappe
- 46.1: Ende
- 47: Gleitkufe
- 48.1: Durchbrechung
- 48.2: Durchbrechung
- 48.3: Durchbrechung
- 49: Konus
- 50: Winkel
- 51: zylindrischer Teil
- 52.1: (oberer) Anschlag
- 52.2: (unterer) Anschlag
- 53: Wegbegrenzer
- 54: (Überhub-) Feder(n)
- 55: Signallampe
- 56: Vibrations-Mess-System/VibrationsSensor
- 57: Kipp- oder Neigungssensor
- 58: Kabel und/oder Funkschnittstelle
- 59: Energieversorgung/ Batterie
- 60: Anzeige (-Einheit)
- 61: Weg- oder Geschwindigkeitssensor
- 62: Minikamera/Miniaturkamera
- 65: Vorrichtung
- 66: Aktuator/Elektromotor
- 67: Antriebswelle
- 67.1: Drehachse
- 68: Exzenterscheibe/ Exzenter(-Nocke)/ Exzenterkörper
- 69: Schwenkhebel/ Schwenkarm
- 70: Schwenkachse/ Drehachse
- 71: erstes Ende von 69
- 72: zweites Ende von 69
- 73: Drehlager/ Schwenklager
- 74: Andrück- und Abstützfläche
- 75: Gummiring/Feder
- 76: Hubbegrenzungsmittel
- 77.2: Antastkörper-Träger
- 77.3: Antastkörper-Träger
- 78.1: Magnet
- 78.2: Magnet
- 79: Aufsetznoppen
- 80: Feder/Blattfeder
- 81: Federträger
- 82: Rückstell-(Feder)
- 90.5: Kipplager/Kippgelenk
- 90.6: Kipplager/Kippgelenk
- 91: (Kipp-)Drehachse
- 92.1: erster Verfahrschlitten/ X-Verfahrschlitten
- 92.2: zweiter Verfahrschlitten/ Y-Verfahrschlitten
- 93: Oberfläche/Referenzebene/Referenzfläche
- 94: Auflage- und Referenzschiene/ Andrückschiene
- 95: Verschiebe-Aktuator/ Verfahrschlitten
- 96: Achskörper
- 97: Doppelpfeil
- 98: Bohrung
- 147: Gleitkufe/ Doppel-Gleitkufe
- 147.1: erster Gleitkufenkörper
- 147.2: zweiter Gleitkufenkörper

## Patentansprüche

1. Rauheitsmessgerät (10.1, 10.2, 10.3, 10.5, 10.6) zur Messung der Rauheit einer Oberfläche (11) eines Körpers (22), mit einem als Tastnadel (25) ausgebildeten Antastkörper, der in einer Messrichtung (26) auslenkbar ist, und mit einem stiftförmigen Gehäuse (13.1, 13.2, 13.3, 13.5, 13.6), das sich in Richtung seiner Gehäuselängsachse (15) über eine Gehäuselänge (21) erstreckt, wobei in dem stiftförmigen Gehäuse (13.1, 13.2, 13.3, 13.5, 13.6) ein zur Erfassung der Auslenkung der Tastnadel (25) in der Messrichtung (26) vorgesehenes Mess-System (30) und eine an dem stiftförmigen Gehäuse (13.1, 13.2, 13.3, 13.5, 13.6) befestigte Lagerung (24.1, 24.2) oder Aufhängung (24.3, 24.5, 24.6) für die Tastnadel (25) angeordnet ist, und wobei die Tastnadel (25) an der Lagerung (24.1, 24.2) oder an der Aufhängung (24.3, 24.5, 24.6) relativ zu dem Gehäuse (13.1, 13.2, 13.3, 13.5, 13.6) in der Messrichtung (26) beweglich gelagert ist und ein zur Erfassung der Rauheit der Oberfläche (11) vorgesehenes, als Tastspitze (27) ausgebildetes Antastende aufweist, das zur Erfassung der Rauheit der Oberfläche (11) an der Oberfläche (11) anliegt, und wobei im Bereich der Tastnadel (25) im Bereich eines Gehäuse-Endes (19) des stiftförmigen Gehäuses (13.1, 13.2, 13.3, 13.5, 13.6) ein zum Andrücken und zur Abstützung des Rauheitsmessgeräts (10.1, 10.2, 10.3, 10.5, 10.6) auf der Oberfläche (11) vorgesehener Andrück- und Abstützkörper (35.1, 35.2, 35.3, 35.5, 35.6) ausgebildet ist, über welchen das Rauheitsmessgerät (10.1, 10.2, 10.3, 10.5, 10.6) zur oder bei der Messung der Rauheit der Oberfläche (11) an der Oberfläche (11) angedrückt und abgestützt ist,
**dadurch gekennzeichnet,**
**dass** die Tastnadel (25) und ihre Tastspitze (27) sich parallel zu der Gehäuselängsachse (15) des stiftförmigen Gehäuses (13.1, 13.2, 13.3, 13.5, 13.6)erstrecken, und dass das stiftförmige Gehäuse (13.1, 13.2, 13.3, 13.5, 13.6)
entweder
in einem Gehäuseabschnitt (20), der sich ausgehend von dem besagten Gehäuse-Ende (19) über die gesamte Gehäuselänge (21) des stiftförmigen Gehäuses (13.1, 13.2, 13.3, 13.5, 13.6) erstreckt, in einer senkrecht zu der Gehäuselängsachse (15) verlaufenden gedachten Querebene (29) betrachtet, eine maximale Außenabmessung (22) von kleiner oder gleich 20 mm aufweist, und wobei die Tastnadel (25) und ihre Tastspitze (27) vollständig innerhalb einer gedachten, parallel zu der Gehäuselängsachse (15) verlaufenden Projektion (23) des die maximale Außenabmessung (22) aufweisenden Gehäuseabschnitts (20) des stiftförmigen Gehäuses (13.1, 13.2, 13.3, 13.5, 13.6) angeordnet ist,
oder
in einem Gehäuseabschnitt (20), der sich ausgehend von dem besagten Gehäuse-Ende (19) über die gesamte Gehäuselänge (21) des stiftförmigen Gehäuses (13.1, 13.2, 13.3, 13.5, 13.6) erstreckt, in einer senkrecht zu der Gehäuselängsachse (15) verlaufenden gedachten Querebene (29) betrachtet, einen maximalen Außendurchmesser (22) von kleiner oder gleich 20 mm aufspannt, und wobei die Tastnadel (25) und ihre Tastspitze (27) vollständig innerhalb einer gedachten, parallel zu der Gehäuselängsachse (15) verlaufenden Projektion (23) des den maximalen Außendurchmesser (22) aufspannenden Gehäuseabschnitts (20) des stiftförmigen Gehäuses (13.1, 13.2, 13.3, 13.5, 13.6) angeordnet ist.

2. Rauheitsmessgerät nach Anspruch 1, **dadurch gekennzeichnet, dass** die Tastnadel (2) eine Tastnadelachse aufweist, die koaxial zu der Gehäuselängsachse (15) angeordnet ist und/oder dass das Mess-System (30) koaxial zu einer Tastnadelachse der Tastnadel (25) und/oder koaxial zu der Gehäuselängsachse (15) angeordnet ist.

3. Rauheitsessgerät nach einem der vorstehenden Ansprüche, **dadurch gekennzeichnet, dass** dieses im Wesentlichen stiftförmig oder als Mess-Stift (10) ausgebildet ist und/oder eine konische, sich zu der Tastspitze (27) der Tastnadel (25) hin verjüngende Gestalt aufweist.

4. Rauheitsmessgerät nach einem der vorstehenden Ansprüche, **dadurch gekennzeichnet, dass** die Tastnadel (25) an der Lagerung (24.1, 24.2) oder an der Aufhängung (24.3, 24.5, 24.6) relativ zu dem stiftförmigen Gehäuse (13.1, 13.2, 13.3, 13.5, 13.6) in der Messrichtung (26) parallel zu der Gehäuselängsachse (15) beweglich gelagert ist.

5. Rauheitsmessgerät nach einem der vorstehenden Ansprüche, **dadurch gekennzeichnet, dass** dieses im Bereich der zur Erfassung der Rauheit vorgesehenen Tastspitze (27) der Tastnadel (25) eine sich zu der Tastspitze (27) hin konisch verjüngende, den Andrück- und Abstützkörper aufweisende Schutzkappe (45.1, 45.2) hat, die eine Durchbrechung (48.1, 48.2) für die Tastspitze (27) der Tastnadel (25) aufweist, durch welche die Tastnadel (25) mit ihrer Tastspitze (27) zur Anlage an der Oberfläche (11) hindurch treten kann oder durch welche die Tastnadel (25) mit ihrer Tastspitze (27) zur Anlage an der Oberfläche (11) hindurch tritt oder durch welche die an der Oberfläche (11) anliegende Tastnadel (25) hindurch tritt.

6. Rauheitsmessgerät nach Anspruch 5, **dadurch gekennzeichnet, dass** die Schutzkappe (45.1, 45.2) relativ zu der Tastnadel (25) oder relativ zu einem Gehäuseteil (16.1, 16.2, 16.3) des Gehäuseabschnitts (20) des stiftförmigen Gehäuses (13.1, 13.2, 13.3, 13.5, 13.6) in der Messrichtung (26) bewegbar ist, so dass bei einer Bewegung der Schutzkappe (45.1, 45.2) in der Messrichtung (26) und in Richtung auf die Tastspitze (27), diese bis in die Durchbrechung (48.1, 48.2) oder durch die Durchbrechung (48.1, 48.2) hindurch gelangt.

7. Rauheitsmessgerät nach Anspruch 5 oder 6, **dadurch gekennzeichnet, dass** dieses ein Mittel (76) zur Begrenzung eines Weges der Schutzkappe (45.1, 45.2) relativ zu der Tastnadel (25) in der Messrichtung (26) umfasst, um welchen Weg die Schutzkappe (45.1, 45.2) relativ zu der Tastnadel (25) in der Messrichtung (26) axial bewegbar ist.

8. Rauheitsmessgerät nach einem der vorstehenden Ansprüche, **dadurch gekennzeichnet,**
**dass** dieses ein Mittel (54; 75; 78.1, 78.2;80) zum Andrücken des Andrück- und Abstützkörpers (35.1, 35.2, 35.3, 35.5, 35.6) und/oder der Tastnadel (25) auf der Oberfläche (11) mit einer bestimmten Andrückkraft oder mit einem bestimmten Anpressdruck umfasst
und/oder
**dass** dieses ein Mittel zum Erfassen der Andrückkraft oder des Anpressdruckes umfasst, mittels dessen die Andrückkraft oder der Anpressdruck erfassbar ist oder erfasst wird
und/oder
**dass** dieses ein Mittel zur Erfassung der Neigung der Tastnadel (25) relativ zu der Oberfläche (11) umfasst, mittels dessen die Neigung der Tastnadel (25) relativ zu der Oberfläche (11) erfassbar ist oder erfasst wird
und/oder
**dass** dieses ein Mittel zur Erfassung der Geschwindigkeit der Tastnadel (25) relativ zu der Oberfläche (11) umfasst, mittels dessen die Geschwindigkeit der Tastnadel (25) relativ zu der Oberfläche (11) erfassbar ist oder erfasst wird
und/oder dass dieses ein Mittel zur Erfassung der Position der Tastnadel (25) während einer Bewegung oder Verschiebung der Tastnadel (25) relativ zu dem Körper (22) entlang der Oberfläche (11) quer oder senkrecht zu der Messrichtung (26) umfasst
und/oder
**dass** dieses ein Mittel zur Erfassung eines Bilds oder Stereobilds der Oberfläche (11) umfasst
und/oder
**dass** dieses ein Mittel zur Erfassung der Temperatur der Oberfläche umfasst
und/oder
**dass** dieses ein Mittel zur externen Signal- oder Datenverarbeitung und/oder zur Stromversorgung, und/oder ein Mittel zur elektronischen Verarbeitung der mittels des Mess-Systems (30) in Form von Daten erfassten Auslenkung der Tastnadel (25) in der Messrichtung (26) und/oder ein Mittel zur Stromversorgung und/oder ein Mittel zum Anzeigen von Messergebnissen umfasst.

9. Rauheitsmessgerät nach einem der vorstehenden Ansprüche, **dadurch gekennzeichnet, dass** es sich bei diesem um ein zur Erfassung der Rauheit der Oberfläche (11) durch eine motorische oder maschinelle Bewegung der Tastnadel (25) mit ihrer Tastspitze (27) entlang der Oberfläche (11) vorgesehenes Messgerät (10.2, 10.3, 10.5, 10.6) handelt, bei dem zur Erfassung der Rauheit der Oberfläche (11) die an der Oberfläche (11) anliegende Tastnadel (25) motorisch oder maschinell entlang der Oberfläche (11) bewegbar ist oder bewegt wird.

10. Rauheitsmessgerät nach Anspruch 9, **dadurch gekennzeichnet, dass** das dieses über eine Andrück- und Abstützfläche des Andrück- und Abstützkörpers (35.2, 35.3, 35.5, 35.6) manuell von Hand stationär an der Oberfläche (11) angedrückt ist oder wird.

11. Rauheitsmessgerät nach Anspruch 9 oder 10, **dadurch gekennzeichnet, dass** die Tastnadel (25) und das Mess-System (30) an einem langgestreckten Schwenkarm (69) befestigt sind, der zusammen mit der Tastnadel (25) und dem Mess-System (30) motorisch oder maschinell um eine Schwenkachse (70) eines gehäuseinternen Schwenklagers (73) verschwenkbar gelagert ist, wobei die Tastnadel (25) und das Mess-System (30) über den Schwenkarm (69) an dem Schwenklager (73) hängen.

12. Rauheitsmessgerät nach Anspruch 11, **dadurch gekennzeichnet, dass** das Schwenklager (73) als ein Drehlager gestaltet ist, das eine Referenz zur Messwert-Referenzbildung in Form eines Kreisbogens vermittelt oder ausbildet, um welchen die Tastnadel (25) relativ zu dem stiftförmigen Gehäuse (13.2, 13.3) verschwenkbar ist oder verschwenkt wird.

13. Rauheitsessgerät nach einem der vorstehenden Ansprüche, **dadurch gekennzeichnet, dass** es sich bei diesem um ein zu einem manuellen Andrücken an der Oberfläche (11) vorgesehenes Handmessgerät (10.1, 10.2, 10.3, 10.5, 10.6) handelt, das manuell an der Oberfläche angedrückt ist oder wird.

14. Verfahren zur Messung der Rauheit einer Oberfläche (11) eines Körpers (12) mittels eines Rauheitsmessgeräts (10.1, 10.2, 10.3, 10.5, 10.6), insbesondere nach einem der vorstehenden Ansprüche, mit einem als Tastnadel (25) ausgebildeten Antastkörper, der in einer Messrichtung (26) auslenkbar ist, und mit einem stiftförmigen Gehäuse (13.1, 13.2, 13.3, 13.5, 13.6), das sich in Richtung seiner Gehäuselängsachse (15) über eine Gehäuselänge (21) erstreckt, wobei in dem stiftförmigen Gehäuse (13.1, 13.2, 13.3, 13.5, 13.6) ein zur Erfassung der Auslenkung der Tastnadel (25) in der Messrichtung (26) vorgesehenes Mess-System (30) und eine an dem stiftförmigen Gehäuse (13.1, 13.2, 13.3, 13.5, 13.6) befestigte Lagerung (24.1, 24.2) oder Aufhängung (24.3, 24.5, 24.6) für die Tastnadel (25) angeordnet ist, und wobei die Tastnadel (25) an der Lagerung (24.1, 24.2) oder an der Aufhängung (24.3, 24.5, 24.6) relativ zu dem stiftförmigen Gehäuse (13.1, 13.2, 13.3, 13.5, 13.6) in der Messrichtung (26) beweglich gelagert ist und ein zur Erfassung der Rauheit der Oberfläche (11) vorgesehenes, als Tastspitze (27) ausgebildetes Antastende aufweist, das zur Erfassung der Rauheit der Oberfläche (11) an der Oberfläche (11) anlegbar ist, und wobei im Bereich der Tastnadel (25) im Bereich eines Gehäuse-Endes (19) des stiftförmigen Gehäuses (13.1, 13.2, 13.3, 13.5, 13.6) ein zum Andrücken und zur Abstützung des Rauheitsmessgeräts (10.1, 10.2, 10.3, 10.5, 10.6) auf der Oberfläche (11) vorgesehener Andrück- und Abstützkörper (35.1, 35.2, 35.3, 35.5, 35.6) ausgebildet ist, über welchen das Rauheitsmessgerät (10.1, 10.2, 10.3, 10.5, 10.6) zur Messung der Rauheit der Oberfläche (11) an der Oberfläche (11) andrückbar und abstützbar ist,
**dadurch gekennzeichnet,**
**dass** die Tastnadel (25) und ihre Tastspitze (27) sich parallel zu der Gehäuselängsachse (15) des stiftförmigen Gehäuses (13.1, 13.2, 13.3, 13.5, 13.6) erstrecken, und dass das stiftförmige Gehäuse (13.1, 13.2, 13.3, 13.5, 13.6)
entweder
in einem Gehäuseabschnitt (20), der sich ausgehend von dem besagten Gehäuse-Ende (19) über die gesamte Gehäuselänge (21) des stiftförmigen Gehäuses (13.1, 13.2, 13.3, 13.5, 13.6) erstreckt, in einer senkrecht zu der Gehäuselängsachse (15) verlaufenden gedachten Querebene (29) betrachtet, eine maximale Außenabmessung (22) von kleiner oder gleich 20 mm aufweist, und wobei die Tastnadel (25) und ihre Tastspitze (27) vollständig innerhalb einer gedachten, parallel zu der Gehäuselängsachse (15) verlaufenden Projektion (23) des die maximale Außenabmessung (22) aufweisenden Gehäuseabschnitts (20) des stiftförmigen Gehäuses (13.1, 13.2, 13.3, 13.5, 13.6) angeordnet ist,
oder
in einem Gehäuseabschnitt (20), der sich ausgehend von dem besagten Gehäuse-Ende (19) über die gesamte Gehäuselänge (21) des stiftförmigen Gehäuses (13.1, 13.2, 13.3, 13.5, 13.6), in einer senkrecht zu der Gehäuselängsachse (15) verlaufenden gedachten Querebene (29) betrachtet, einen maximalen Außendurchmesser (22) von kleiner oder gleich 20 mm aufspannt, und wobei die Tastnadel (25) vollständig innerhalb einer gedachten, parallel zu der Gehäuselängsachse (15) verlaufenden Projektion (23) des den maximalen Außendurchmesser (22) aufspannenden Gehäuseabschnitts (20) des stiftförmigen Gehäuses (13.1, 13.2, 13.3, 13.5, 13.6) angeordnet ist,
und **dass** das Rauheitsmessgerät (10.1, 10.2, 10.3, 10.5, 10.6) mit seinem Andrück- und Abstützkörper (35.1, 35.2, 35.3, 35.5, 35.6) an der Oberfläche (11) des Körpers (12) angedrückt und abgestützt wird, wobei oder wonach die Tastnadel (25) mit ihrer Tastspitze (27) an der Oberfläche (11) angelegt wird, wobei oder wonach die mit ihrer Tastspitze (27) an der Oberfläche (11) anliegende Tastnadel (25) quer oder senkrecht zu der Messrichtung (26) relativ zu dem Körper (12) entlang der Oberfläche (11) bewegt wird, wobei die Rauheit der Oberfläche (11) mittels der Tastnadel (25) in der Messrichtung (26) abgetastet wird.

15. Verfahren nach Anspruch 14, **dadurch gekennzeichnet, dass** es sich bei dem Rauheitsmessgerät (10.1, 10.2, 10.3, 10.5, 10.6) um ein Handmessgerät handelt, das mit seinem Andrück- und Abstützkörper (35.1, 35.2, 35.3, 35.5, 35.6) manuell auf die Oberfläche (11) des Körpers (12) gedrückt wird, wobei oder wonach die Tastnadel (25) mit ihrer Tastspitze (27) an der Oberfläche (11) angelegt wird, wobei oder wonach die mit ihrer Tastspitze (27) an der Oberfläche (11) anliegende Tastnadel (25) quer oder senkrecht zu der Messrichtung (26) relativ zu dem Körper (12) von Hand entlang der Oberfläche (11) bewegt wird, wobei die Rauheit der Oberfläche (11) mittels der Tastnadel (25) in der Messrichtung (26) abgetastet wird.

## Claims

1. Roughness measuring instrument (10.1, 10.2, 10.3, 10.5, 10.6) for measuring the roughness of a surface (11) of a body (22), with a scanning body, which is constructed as a scanning needle (25) and which is deflectable in a measuring direction (26), and with a pin-shaped housing (13.1, 13.2, 13.3, 13.5, 13.6) extending in the direction of its housing longitudinal axis (15) over a housing length (21), wherein a measuring system (30) intended for detection of the deflection of the scanning needle (25) in the measuring direction (26) and a mounting (24.1, 24.2) or suspension (24.3, 24.5, 24.6), which is fastened to the pin-shaped housing (13.1, 13.2, 13.3, 13.5, 13.6) for the scanning needle (25) is arranged in the pin-shaped housing (13.1, 13.2, 13.3, 13.5, 13.6), and wherein the scanning needle (25) is mounted at the mounting (24.1, 24.2) or at the suspension (24.3, 24.5, 24.6) to be movable relative to the housing (13.1, 13.2, 13.3, 13.5, 13.6) in the measuring direction (26) and has a scanning end, which is intended for detecting the roughness of the surface (11) and is constructed as a scanning tip (27) and which for detecting the roughness of the surface (11) bears against the surface (11), and wherein constructed in the region of the scanning needle (25) in the area of a housing end (19) of the pin-shaped housing (13.1, 13.2, 13.3, 13.5, 13.6) is a pressing and supporting body (35.1, 35.2, 35.3, 35..5, 35.6), which is intended for pressing and supporting of the roughness measuring instrument (10.1, 10.2, 10.3, 10.5, 10.6) on the surface (11) and by way of which the roughness measuring instrument (10.1, 10.2, 10.3, 10.5, 10.6) is pressed against and supported on the surface (11) for or during measurement of the roughness of the surface (11), **characterised in that** the scanning needle (25) and its scanning tip (27) thereof extend parallel to the housing longitudinal axis (15) of the pin-shaped housing (13.1, 13.2, 13.3, 13.5, 13.6) and that the pin-shaped housing (13.1, 13.2, 13.3, 13.5, 13.6) either
has in a housing section (20) - which starting from the said housing end (19) extends over the entire housing length (21) of the pin-shaped housing (13.1, 13.2, 13.3, 13.5, 13.6) - a maximum outer dimension (22) less than or equal to 20 millimetres considered in a notional transverse plane (29) extending perpendicularly to the housing longitudinal axis (15), and wherein the scanning needle (25) and its scanning tip (27) are arranged completely within a notional projection (23), which extends parallel to the housing longitudinal axis (15), of the housing section (20) of the pin-shaped housing (13.1, 13.2, 13.3, 13.5, 13.6) having the maximum outer dimension (22)
or
spreads out to in a housing section (20) - which starting from the said housing end (19) extends over the entire housing length (21) of the pin-shaped housing (13.1, 13.2, 13.3, 13.5, 13.6) - a maximum outer dimension (22) less than or equal to 20 millimetres considered in a notional transverse plane (29) extending perpendicularly to the housing longitudinal axis (15), and wherein the scanning needle (25) and its scanning tip (27) are arranged completely within a notional projection (23), which extends parallel to the housing longitudinal axis (15), of the housing section (20) of the pin-shaped housing (13.1, 13.2, 13.3, 13.5, 13.6) spreading out to the maximum outer dimension (22).

2. Roughness measuring instrument according to claim 1, **characterised in that** the scanning needle (2) has a scanning needle axis arranged coaxially with the housing longitudinal axis (15) and/or that the measuring system (30) is arranged coaxially with a scanning needle axis of the scanning needle (25) and/or coaxially with the housing longitudinal axis (15).

3. Roughness measuring instrument according to one of the preceding claims, **characterised in that** this is constructed to be substantially pin-shaped or as a measuring pin (10) and/or has a shape conically tapering towards the scanning tip (27) of the scanning needle (25).

4. Roughness measuring instrument according to any one of the preceding claims, **characterised in that** the scanning needle (25) is mounted at the mount (24.1, 24.2) or at the suspension (24.3, 24.5, 24.6) to be movable relative to pin-shaped housing (13.1, 13.2, 13.3, 13.5, 13.6) in the measuring direction (26) parallel to the housing longitudinal axis (15).

5. Roughness measuring instrument according to any one of the preceding claims, **characterised in that** this has in the region of the scanning tip (27), which is intended for detecting the roughness, of the scanning needle (25) a protective cap (45.1, 45.2), which conically tapers towards the scanning tip (27) and has the pressing and supporting body and which includes passage (48.1, 48.2) for the scanning tip (27) of the scanning needle (25), through which passage the scanning needle (25) can pass by its scanning tip (27) for contact with the surface (11) or through which the scanning needle (25) can pass by its scanning tip (27) for contact with the surface (11) or through which the scanning needle (25) bearing against the surface (11) can pass.

6. Roughness measuring instrument according to claim 5, **characterised in that** the protective cap (45.1, 45.2) is movable relative to the scanning needle (25) or relative to a housing part (16.1, 16.2, 16.3) of the housing section (20) of the pin-shaped housing (13.1, 13.2, 13.3, 13.5, 13.6) in the measuring direction (26) so that when movement of the protective cap (45.1, 45.2) in the measuring direction (26) and in direction towards the scanning tip (27) takes place this passes into the passage (48.1, 48.2) or through the passage (48.1, 48.2).

7. Roughness measuring instrument according to claim 5 or 6, **characterised in that** this comprises means (76) for limitation of travel of the protective cap (45.1, 45.2) relative to the scanning needle (25) in the measuring direction (26), by which travel the protective cap (45.1, 45.2) is axially movable relative to the scanning needle (25) in the measuring direction (26).

8. Roughness measuring instrument according to any one of the preceding claims, **characterised in that** this comprises means (45; 75; 78.1, 78.2; 80) for pressing the pressing and supporting body (35.1, 35.2, 35.3, 35.5, 35.6) and/or the scanning needle (25) onto the surface (11) by a defined pressure force or by a defined pressing force
and/or that this comprises means for detecting the pressure force or the pressing force, by means of which the pressure force or the pressing force is detectable or is detected
and/or that this comprises means for detecting the inclination of the scanning needle (25) relative to the surface (11), by means of which the inclination of the scanning needle (25) relative to the surface (11) is detectable or detected
and/or that this comprises means for detecting the speed of the scanning needle (25) relative to the surface (11), by means of which the speed of the scanning needle (25) relative to the surface (11) is detectable or is detected
and/or that this comprises means for detecting the position of the scanning needle (25) during movement or displacement of the scanning needle (25) relative to the body (22) along the surface (11) transversely or perpendicularly to the measuring direction (26)
and/or that this comprises means for detecting an image or stereo-image of the surface (11)
and/or that this comprises means for detecting the temperature of the surface
and/or that this comprises means for external signal or data processing and/or for current supply and/or means for electronic processing of the deflecting, which is detected by means of the measuring system (30) in the form of data, of the scanning needle (25) in the measuring direction (26) and/or means for current supply and/or means for displaying the measurement results.

9. Roughness measuring instrument according to any one of the preceding claims, **characterised in that** this is a measuring instrument (10.2, 10.3, 10.5, 10.6), which is intended for detecting the roughness of the surface (11) by a motorised or mechanical movement of the scanning needle (25) by its scanning tip (27) along the surface (11) and in which for detection of the roughness of the surface (11) the scanning needle (25) contacting the surface (11) is movable or moved along the surface (11) by motor of mechanically.

10. Roughness measuring instrument according to claim 9, **characterised in that** this is pressed or to be pressed manually by hand in stationary position against a surface (11) by way of a pressing and supporting surface of the pressing and supporting body (35.2, 35.3, 35.5, 35.6).

11. Roughness measuring instrument according to claim 9 or 10, **characterised in that** the scanning needle (25) and the measuring system (30) are attached to an elongate pivot arm (69), which together with the scanning needle (25) and the measuring system (30) is mounted to be pivotable by motor or mechanically about a pivot axis (70) of a pivot bearing (73) internal to the housing, wherein the scanning needle (25) and the measuring system (30) are suspended by way of the pivot arm (69) at the pivot bearing (73).

12. Roughness measuring instrument according to claim 11, **characterised in that** the pivot bearing (73) is formed as a rotary bearing which mediates or forms a reference for the measured value reference formation in the form of an arc, by which the scanning needle (25) is pivotable or pivoted relative to the pin-shaped housing (13.2, 13.3).

13. Roughness measuring instrument according to any one of the preceding claims, **characterised in that** this is a hand measuring instrument (10.1, 10.2, 10.3, 10.5, 10.6) which is intended for manual pressing against the surface (11) and which is always to be manually pressed against the surface.

14. Method for measuring the roughness of a surface (11) of a body (12) by means of a roughness measuring instrument (10.1, 10.2, 10.3, 10.5, 10.6), particularly according to any one of the preceding claims, with a scanning body, which is constructed as a scanning needle (25) and which is deflectable in a measuring direction (26), and with a pin-shaped housing (13.1, 13.2, 13.3, 13.5, 13.6) extending in the direction of its housing longitudinal axis (15) over a housing length (21), wherein a measuring system (30) intended for detection of the deflection of the scanning needle (25) in the measuring direction (26) and a mounting (24.1, 24.2) or suspension (24.3, 24.5, 24.6), which is fastened to the pin-shaped housing (13.1, 13.2, 13.3, 13.5, 13.6) for the scanning needle (25) is arranged in the pin-shaped housing (13.1, 13.2, 13.3, 13.5, 13.6), and wherein the scanning needle (25) is mounted at the mounting (24.1, 24.2) or at the suspension (24.3, 24.5, 24.6) to be movable relative to the housing (13.1, 13.2, 13.3, 13.5, 13.6) in the measuring direction (26) and has a scanning end, which is intended for detecting the roughness of the surface (11) and is constructed as a scanning tip (27) and which for detecting the roughness of the surface (11) can bear against the surface (11), and wherein constructed in the region of the scanning needle (25) in the area of a housing end (19) of the pin-shaped housing (13.1, 13.2, 13.3, 13.5, 13.6) is a pressing and supporting body (35.1, 35.2, 35.3, 35..5, 35.6), which is intended for pressing and supporting of the roughness measuring instrument (10.1, 10.2, 10.3, 10.5, 10.6) on the surface (11) and by way of which the roughness measuring instrument (10.1, 10.2, 10.3, 10.5, 10.6) is pressed against and supported on the surface (11) for or during measurement of the roughness of the surface (11), **characterised in that** the scanning needle (25) and its scanning tip (27) thereof extend parallel to the housing longitudinal axis (15) of the pin-shaped housing (13.1, 13.2, 13.3, 13.5, 13.6) and that the pin-shaped housing (13.1, 13.2, 13.3, 13.5, 13.6)
either
has in a housing section (20) - which starting from the said housing end (19) extends over the entire housing length (21) of the pin-shaped housing (13.1, 13.2, 13.3, 13.5, 13.6) - a maximum outer dimension (22) less than or equal to 20 millimetres considered in a notional transverse plane (29) extending perpendicularly to the housing longitudinal axis (15), and wherein the scanning needle (25) and its scanning tip (27) are arranged completely within a notional projection (23), which extends parallel to the housing longitudinal axis (15), of the housing section (20) of the pin-shaped housing (13.1, 13.2, 13.3, 13.5, 13.6) having the maximum outer dimension (22)
or
spreads out to in a housing section (20) - which starting from the said housing end (19) extends over the entire housing length (21) of the pin-shaped housing (13.1, 13.2, 13.3, 13.5, 13.6) - a maximum outer dimension (22) less than or equal to 20 millimetres considered in a notional transverse plane (29) extending perpendicularly to the housing longitudinal axis (15), and wherein the scanning needle (25) is arranged completely within a notional projection (23), which extends parallel to the housing longitudinal axis (15), of the housing section (20) of the pin-shaped housing (13.1, 13.2, 13.3, 13.5, 13.6) spreading out to the maximum outer dimension (22),
and that the roughness measuring instrument (10.1, 10.2, 10.3, 10.5, 10.6) is pressed and supported by its pressing and supporting body (35.1, 35.2, 35.3, 35.5, 35.6) against the surface (11) of the body (12), wherein or whereafter the scanning needle (25) is placed by its scanning tip (27) against the surface (11), wherein or whereafter the scanning needle (25) resting by its scanning tip (27) against the surface (11) is moved along the surface (11) relative to the body (12) transversely or perpendicularly to the measuring direction (26) and wherein the roughness of the surface (11) is scanned by means of the scanning needle (25) in the measuring direction (26).

15. Method according to claim 14, **characterised in that** the roughness measuring instrument (10.1, 10.2, 10.3, 10.5, 10.6) is a end measuring instrument which is manually pressed against the surface (11) of the body (12) by its pressing and supporting body (35.1, 35.2, 35.3, 35.5, 35.6), wherein or whereafter the scanning needle (25) is placed by its scanning tip (27) against the surface (11), wherein or whereafter the scanning needle (25) resting by its scanning tip (27) on the surface (11) is manually moved relative to the body (12) along the surface (11) transversely or perpendicularly to the measuring direction (26) and wherein the roughness of the surface (11) is scanned by means of the scanning needle (25) in the measuring direction (26).

## Revendications

1. Appareil de mesure de rugosité (10.1, 10.2, 10.3, 10.5, 10.6) pour la mesure de la rugosité d'une surface (11) d'un corps (22), avec un corps de tâtage réalisé comme aiguille de tâtage (25), qui peut être dévié dans une direction de mesure (26), et avec un boîtier en forme de tige (13.1, 13.2, 13.3, 13.5, 13.6) qui s'étend dans la direction de son axe longitudinal de boîtier (15) sur une longueur de boîtier (21), où est disposé dans le boîtier en forme de tige (13.1, 13.2, 13.3, 13.5, 13.6) un système de mesure (30) prévu pour la détection de la déviation de l'aiguille de tâtage (25) dans la direction de mesure (26) et un logement (24.1, 24.2) ou accrochage (24.3, 24.5, 24.6) fixé au boîtier en forme de tige (13.1, 13.2, 13.3, 13.5, 13.6) pour l'aiguille de tâtage (25), et où l'aiguille de tâtage (25) est logée d'une manière déplaçable au logement (24.1, 24.2) ou à l'accrochage (24.3, 24.5, 24.6) relativement au boîtier (13.1, 13.2, 13.3, 13.5, 13.6) dans la direction de mesure (26) et présente une extrémité de tâtage réalisée comme pointe de tâtage (27) prévue pour la détection de la rugosité de la surface (11) qui, pour la détection de la rugosité de la surface (11) s'applique à la surface (11), et où est réalisé dans la zone de l'aiguille de tâtage (25), dans la zone d'une extrémité de boîtier (19) du boîtier en forme de tige (13.1, 13.2, 13.3, 13.5.5, 35.6) un corps de pression et d'appui pour l'application et pour l'appui de l'appareil de mesure de rugosité (10.1, 10.2, 10.3, 10.5, 10.6) à la surface (11) par lequel l'appareil de mesure de rugosité (10.1, 10.2, 10.3, 10.5, 10.6), pour ou lors de la mesure de la rugosité de la surface (11) est appliqué par pression ou appuyé à la surface (11),
**caractérisé en ce que**
l'aiguille de tâtage (25) et sa pointe de tâtage (27) s'étendent parallèlement à l'axe longitudinal de boîtier (15) du boîtier en forme de tige (13.1, 13.2, 13.3, 13.5, 13.6), et **en ce que** le boîtier en forme de tige (13.1, 13.2, 13.3, 13.5, 13.6)
soit
présente dans une section de boîtier (20), qui s'étend, en partant de ladite extrémité de boîtier (19) sur toute la longueur de boîtier (21) du boîtier en forme de tige (13.1, 13.2, 13.3, 13.5, 13.6), vu dans un plan transversal (29) imaginaire s'étendant perpendiculairement à l'axe longitudinal de boîtier (15), une dimension extérieure maximale (22) inférieure ou égale à 20 mm, et où l'aiguille de tâtage (25) et sa pointe de tâtage (27) est disposée entièrement à l'intérieur d'une projection imaginaire (23) s'étendant parallèlement à l'axe longitudinal de boîtier (15) présentant la dimension extérieure maximale (22) du boîtier en forme de tige (13.1, 13.2, 13.3, 13.5, 13.6),
ou
est disposé dans une section de boîtier (20) qui, en partant de ladite extrémité de boîtier (19) s'étend sur toute la longueur de boîtier (21) du boîtier en forme de tige (13.1, 13.2, 13.3, 13.5, 13.6), dans un plan transversal imaginaire (29) s'étendant perpendiculairement à l'axe longitudinal de boîtier (15), présente un diamètre extérieur maximal (22) inférieur ou égal à 20 mm, et où l'aiguille de tâtage (25) et sa pointe de tâtage (27) est disposée entièrement à l'intérieur d'une projection (23) imaginaire, s'étendant parallèlement à l'axe longitudinal de boîtier (15) de la section de boîtier (20) couvrant le diamètre extérieur maximal (22) du boîtier en forme de tige (13.1, 13.2, 13.3, 13.5, 13.6).

2. Dispositif de mesure de rugosité selon la revendication 1, **caractérisé en ce que** l'aiguille de tâtage (2) présente un axe d'aiguille de tâtage qui est disposé coaxialement à l'axe longitudinal de boîtier (15) et/ou que le système de mesure (30) est disposé d'une manière coaxiale relativement à un axe d'aiguille de tâtage de l'aiguille de tâtage (25) et/ou d'une manière coaxiale à l'axe longitudinal de boîtier (15).

3. Dispositif de mesure de rugosité selon l'une des revendications précédentes, **caractérisé en ce que** celui-ci est réalisé pour l'essentiel en forme de tige ou comme tige de mesure (10) et/ou présente une forme conique, s'effilant vers la pointe de tâtage (27) de l'aiguille de tâtage (25).

4. Dispositif de mesure de rugosité selon l'une des revendications précédentes, **caractérisé en ce que** l'aiguille de tâtage (25) est logée au logement (24.1, 24.2) ou à l'accrochage (24.3, 24.5, 24.6) relativement au boîtier en forme de tige (13.1, 13.2, 13.3, 13.5, 13.6) d'une manière déplaçable dans la direction de mesure (26) parallèlement à l'axe longitudinal de boîtier (15).

5. Dispositif de mesure de rugosité selon l'une des revendications précédentes, **caractérisé en ce que** celui-ci présente dans la zone de la pointe de tâtage (27) de l'aiguille de tâtage (25) prévue pour la détection de la rugosité, un capuchon de protection (45.1, 45.2) s'effilant d'une manière conique vers la pointe de tâtage (27), présentant le corps de pression et d'appui, qui comprend un perçage (48 ;1, 48.2) pour la pointe de tâtage (27) de l'aiguille de tâtage (25), à travers lequel l'aiguille de tâtage (25) avec sa pointe de tâtage (27) peut passer en vue de l'application à la surface (11), ou bien à travers lequel passe l'aiguille de tâtage (25) avec sa pointe de tâtage (27) pour l'application à la surface (11) ou à travers lequel passe l'aiguille de tâtage (25) s'appliquant à la surface (11).

6. Dispositif de mesure de rugosité selon la revendication 5, **caractérisé en ce que** le capuchon de protection (45.1, 45.2) est déplaçable relativement à l'aiguille de tâtage (25) ou relativement à une partie de boîtier (16.1, 16.2, 16.3) de la section de boîtier (20) du boîtier en forme de tige (13.1, 13.2, 13.3, 13.5, 13.6) dans la direction de mesure (26), de sorte que lors d'un déplacement du capuchon de protection (45.1, 45.2) dans la direction de mesure (26) et dans la direction vers la pointe de tâtage (27), celui-ci arrive jusque dans le perçage (48.1, 48.2) ou à travers le perçage (48.1, 48.2).

7. Dispositif de mesure de rugosité selon la revendication 5 ou 6, **caractérisé en ce que** celui-ci comprend un moyen (76) pour la délimitation d'un chemin du capuchon de protection (45.1, 45.2) relativement à l'aiguille de tâtage (25) dans la direction de mesure (26), chemin selon lequel le capuchon de protection (45.1, 45.2) est déplaçable axialement relativement à l'aiguille de tâtage (25) dans la direction de mesure (26).

8. Dispositif de mesure de rugosité selon l'une des revendications précédentes, **caractérisé en ce que** celui-ci comprend un moyen (54 ; 75 ; 78.1, 78.2 ; 80) pour l'application par pression du corps de pression et d'appui (35.1, 35.2, 35.3, 35.5, 35.6) et/ou de l'aiguille de tâtage (25) sur la surface (11) avec une force de pression déterminée ou avec une pression d'application déterminée,
et/ou
**en ce que** celui-ci comprend un moyen pour la détection de la force d'application par pression ou de la pression d'application par lequel la force d'application par pression ou la pression d'application peut être détectée ou est détectée
et/ou
**en ce que** celui-ci comprend un moyen pour la détection de l'inclinaison de l'aiguille de tâtage (25) relativement à la surface (11), au moyen duquel l'inclinaison de l'aiguille de tâtage (25) peut être détectée ou est détectée relativement à la surface (11),
et/ou
**en ce que** celui-ci comprend un moyen pour la détection de la vitesse de l'aiguille de tâtage (25) relativement à la surface (11), par lequel la vitesse de l'aiguille de tâtage (25) peut être détectée ou est détectée relativement à la surface (11)
et/ou
**en ce que** celui-ci comprend un moyen pour la détection de la position de l'aiguille de tâtage (25) pendant un déplacement ou un mouvement de l'aiguille de tâtage (25) relativement au corps (22) le long de la surface (11) d'une manière transversale ou perpendiculaire à la direction de mesure (26)
et/ou
**en ce que** celui-ci comprend un moyen pour la détection d'une image ou d'une image stéréo de la surface (11) et/ou
**en ce que** celui-ci comprend un moyen pour la détection de la température de la surface
et/ou
**en ce que** celui-ci comprend un moyen pour le traitement externe des signaux ou données et/ou pour l'alimentation en courant, et/ou un moyen pour le traitement électronique de la déviation de l'aiguille de tâtage (25) détectée au moyen du système de mesure (30) sous la forme de données, dans la direction de mesure (26)
et/ou
un moyen pour l'alimentation en courant et/ou un moyen pour l'affichage de résultats de mesure.

9. Dispositif de mesure de rugosité selon l'une des revendications précédentes, **caractérisé en ce que** dans le cas de celui-ci, il s'agit d'un dispositif de mesure (10.2, 10.3, 10.5, 10.6) prévu pour la détection de la rugosité de la surface (11) par un déplacement par moteur ou par machine de l'aiguille de tâtage (25) avec sa pointe de tâtage (27) le long de la surface (11), dans lequel, pour la détection de la rugosité de la surface (11), l'aiguille de tâtage (25) s'appliquant à la surface (11) peut être déplacée ou est déplacée par moteur ou par machine le long de la surface (11).

10. Dispositif de mesure de rugosité selon la revendication 9, **caractérisé en ce que** celui-ci est appliqué ou sera appliqué par une face d'application et d'appui du corps d'application et d'appui (35.2, 35.3, 35.5, 35.6) manuellement à la main d'une manière stationnaire à la surface (11).

11. Dispositif de mesure de rugosité selon la revendication 9 ou 10, **caractérisé en ce que** l'aiguille de tâtage (25) et le système de mesure (30) sont fixés à un bras pivotant oblong (69), qui est logé d'une manière pivotant conjointement avec l'aiguille de tâtage (25) et le système de mesure (30) par moteur ou par machine autour d'un axe de pivotement (70) d'un palier de pivotement (73) interne au boîtier, où l'aiguille de tâtage (25) et le système de mesure (30) sont accrochés par le bras pivotant (69) au palier de pivotement (73).

12. Dispositif de mesure de rugosité selon la revendication 11, **caractérisé en ce que** le palier pivotant (73) est configuré comme un palier tournant qui fournit ou constitue une référence pour la formation de référence de valeur de mesure sous la forme d'un arc de cercle, autour duquel l'aiguille de tâtage (25) peut être pivotée ou est pivotée relativement au boîtier en forme de tige (13.2, 13.3).

13. Dispositif de mesure de rugosité selon l'une des revendications précédentes, **caractérisé en ce que** dans le cas de celui-ci, il s'agit d'un appareil de mesure manuel (10.1, 10.2, 10.3, 10.5, 10.6) prévu pour l'application manuelle à la surface (11), qui est appliqué ou sera appliqué manuellement à la surface.

14. Procédé de mesure de la rugosité d'une surface (11) d'un corps (12) au moyen d'un dispositif de mesure de rugosité (10.1, 10.2, 10.3, 10.5, 10.6), en particulier selon l'une des revendications précédentes, avec un corps de tâtage réalisé sous forme d'aiguille de tâtage, qui peut être dévié dans une direction de mesure (26), et avec un boîtier en forme de tige (13.1, 13.2, 13.3, 13.5, 13.6) qui s'étend dans la direction de son axe longitudinal de boîtier (15) sur une longueur de boîtier (21), où est disposé dans le boîtier en forme de tige (13.1, 13.2, 13.3, 13.5, 13.6) un système de mesure (30) prévu pour la détection de la déviation de l'aiguille de tâtage (25) dans la direction de mesure (26), et un logement (24.1, 24.2) ou accrochage (24.3, 24.5, 24.6) pour l'aiguille de tâtage (25) fixé au boîtier en forme de tige (13.1, 13.2, 13.3, 13.5, 13.6), et où l'aiguille de tâtage est logée d'une manière déplaçable au logement (24.1, 24.2) ou à l'accrochage (24.3, 24.5, 24.6) relativement au boîtier en forme de tige (13.1, 13.2, 13.3, 13.5, 13.6) dans la direction de mesure (26) et présente une extrémité de tâtage réalisée comme pointe de tâtage (27), prévue pour la détection de la rugosité de la surface (11), applicable à la surface (11) pour la détection de la rugosité de la surface (11), et où peut être appliqué ou appuyé, dans la zone de l'aiguille de tâtage (25), dans la zone d'une extrémité de boîtier (19) du boîtier en forme de tige (13.1, 13.2, 13.3, 13.5, 13.6) un corps d'application et d'appui (35.1, 35.2, 35.3, 35.5, 35.6) prévu sur la surface (11) pour l'application et pour l'appui du dispositif de mesure de rugosité (10.1, 10.2, 10.3, 10.5, 10.6), par lequel le dispositif de mesure de rugosité (10.1, 10.2, 10.3, 10.5, 10.6), pour la mesure de la rugosité de la surface (11), peut être appliqué et appuyé à la surface (11),
**caractérisé en ce que** l'aiguille de tâtage (25) et sa pointe de tâtage (27) s'étendent parallèlement à l'axe longitudinal de boîtier (15) du boîtier en forme de tige (13.1, 13.2, 13.3, 13.5, 13.6), et **en ce que** le boîtier en forme de tige (13.1, 13.2, 13.3, 13.5, 13.6)
soit
présente dans une section de boîtier (20), (20) qui s'étend, en partant de ladite extrémité de boîtier (19) sur toute la longueur de boîtier (21) du boîtier en forme de tige (13.1, 13.2, 13.3, 13.5, 13.6), vu dans un plan transversal (29) imaginaire s'étendant perpendiculairement à l'axe longitudinale de boîtier (15), une dimension extérieure maximale (22) inférieure ou égale à 20 mm, et où l'aiguille de tâtage (25) et sa pointe de tâtage (27) est disposée entièrement à l'intérieur d'une projection imaginaire (23) s'étendant parallèlement à l'axe longitudinal de boîtier (15) de la section de boîtier (20) présentant la dimension extérieure maximale (22) du boîtier en forme de tige (13.1, 13.2, 13.3, 13.5, 13.6),
ou
est disposé dans une section de boîtier (20) qui, en partant de ladite extrémité de boîtier (19) s'étend sur toute la longueur de boîtier (21) du boîtier en forme de tige (13.1, 13.2, 13.3, 13.5, 13.6), vu dans un plan transversal imaginaire (29) s'étendant perpendiculairement à l'axe longitudinal de boîtier (15), présente un diamètre extérieur maximal (22) inférieur ou égal à 20 mm, et où l'aiguille de tâtage (25) est disposée entièrement à l'intérieur d'une projection (23) imaginaire, s'étendant parallèlement à l'axe longitudinal de boîtier (15) de la section de boîtier (20) formant le diamètre extérieur maximal (22) du boîtier en forme de tige (13.1, 13.2, 13.3, 13.5, 13.6),
et **en ce que** le dispositif de mesure de rugosité (10.1, 10.2, 10.3, 10.5, 10.6) est appliqué ou appuyé avec son corps d'application et d'appui (35.1, 35.2, 35.3, 35.5, 35.6) à la surface (11) du corps (12), où ou bien à la suite de quoi l'aiguille de tâtage (25) est appliquée avec sa pointe de tâtage (27) à la surface (11), où ou bien à la suite de quoi l'aiguille de tâtage (25) s'appliquant avec sa pointe de tâtage (27) à la surface (11) est déplacée transversalement ou perpendiculairement à la direction de mesure (26) relativement au corps (12) le long de la surface (11), où la rugosité de la surface (11) est balayée au moyen de l'aiguille de tâtage (25) dans la direction de mesure (26).

15. Procédé selon la revendication 14, **caractérisé en ce que** dans le cas du dispositif de mesure de rugosité (10.1, 10.2, 10.3, 10.5, 10.6) il s'agit d'un dispositif de mesure manuel qui est appliqué avec son corps d'application et d'appui (35.1, 35.2, 35.3, 35.5, 35.6) manuellement à la surface (11) du corps (12), où ou bien à la suite de quoi l'aiguille de tâtage (25) est appliquée avec sa pointe de tâtage (27) à la surface (11), où ou bien à la suite de quoi l'aiguille de tâtage (25) s'appliquant avec sa pointe de tâtage (27) à la surface (11) est déplacée transversalement ou perpendiculairement à la direction de mesure (26) relativement au corps (12) à la main le long de la surface (11), où la rugosité de la surface (11) est balayée au moyen de l'aiguille de tâtage (25) dans la direction de mesure (26).
